# EUROPÄISCHE PATENTSCHRIFT

(11) **EP 3 947 060 B1**
(45) Veröffentlichungstag und Bekanntmachung des Hinweises auf die Patenterteilung: **19.06.2024**
(21) Anmeldenummer: 20715336.2
(22) Anmeldetag: 27.03.2020
(51) Int. Cl.: B60S 3/04, B01D 17/00, B62H 3/08, C02F 1/00, B60S 5/00

(54) **WASCH- UND PFLEGEVORRICHTUNG FÜR EIN RADFAHRZEUG MIT ABTRENNUNG VON WASCHFLÜSSIGKEIT UND PFLEGEMITTEL**
WASHING AND TREATMENT APPARATUS FOR A WHEELED VEHICLE, WITH SEPARATION OF WASHING LIQUID AND TREATMENT SUBSTANCE
DISPOSITIF DE LAVAGE ET D'ENTRETIEN POUR VÉHICULE À ROUES AVEC SÉPARATION DU LIQUIDE DE LAVAGE ET DU PRODUIT D'ENTRETIEN

(30) Priorität: 29.03.2019 DE 102019108229
(43) Veröffentlichungstag der Anmeldung: 09.02.2022
(73) Patentinhaber: Easy Power GmbH, 82515 Wolfratshausen (DE)
(72) Erfinder: BUCHNER, Maximilian, 80538 München (DE)
(74) Vertreter: Dilg, Haeusler, Schindelmann Patentanwaltsgesellschaft mbH
(86) Internationale Anmeldenummer: PCT/EP2020/058654
(87) Internationale Veröffentlichungsnummer: WO 2020/201053

(56) Entgegenhaltungen:
- CN-A- 103 419 701
- DE-A1- 4 400 613
- DE-A1- 4 414 452
- GB-A- 2 432 512
- TW-U- M 369 887
- US-A1- 2017 239 691

## Beschreibung

Die Erfindung betrifft eine Wasch- und Pflegevorrichtung für ein Radfahrzeug, eine Anordnung, ein System und ein Verfahren zum Waschen und Pflegen eines Radfahrzeugs.

Für Benutzer eines Fahrrads und anderer Radfahrzeuge kann es wünschenswert sein, eine Reinigung maschinell und umweltfreundlich durchzuführen. Dabei soll das Fahrrad vollumfänglich und in ausreichender Qualität gereinigt werden. Der Waschprozess soll zu keiner Beschädigung des Fahrrads führen. Um ein großes Einsatzgebiet zu gewährleisten, soll die Waschanlage im Selbstbedienungsbetrieb arbeiten können. Um die Umwelt zu schonen, sollen Schmutzstoffe entsprechend gehandhabt werden.

DE 20 2014 004 339 U1 offenbart eine bürstenlose Fahrradwaschanlage mit Wasser-Recycling, wobei die Anlage aus einer abgeschlossenen Waschkabine mit Düsen-, Fahrradhalterungs- und Wasser-Recyclingsystem und einem abgeschlossenen Technikraum mit Medien- und Energieversorgungssystem besteht.

Eine solche Fahrradwaschanlage ist allerdings aufwendig in Konstruktion und Betrieb.

CN 103 419 701 A offenbart eine Autowaschanlage, welche auf bzw. in einem LKW angeordnet ist. Die Waschanlage weist eine Abwasser-Aufbereitungsvorrichtung, eine Wasserumwälzvorrichtung, einen Präzipitations-Tank, einen Tank für biologische Reaktionen sowie einen Wasservorrat auf. DE 44 14 452 A1 offenbart eine mobile Vorrichtung zum Warten und Reinigen von Fahrzeugen. Die Vorrichtung weist Einrichtungen zum Auffangen, Reinigen und Entsorgen von Waschflüssigkeiten auf, jedoch keine Pflegeeinrichtung zum Pflegen des Fahrzeugs.

Die US 2010/307531 A1 offenbart eine ähnlich wie die durch den Oberbegriff des Anspruchs 1 definierte Wasch- und Pflegevorrichtung für ein Fahrrad.

Es ist eine Aufgabe der vorliegenden Erfindung, mit vertretbarem Aufwand ein Reinigen eines Radfahrzeugs auf wirksame und umweltverträgliche Weise zu ermöglichen.

Diese Aufgabe wird durch die Gegenstände mit den Merkmalen gemäß den unabhängigen Patentansprüchen gelöst. Weitere Ausführungsbeispiele sind in den abhängigen Patentansprüchen gezeigt.

Erfindungsgemäß ist eine Wasch- und Pflegevorrichtung für ein Radfahrzeug (insbesondere für ein Fahrrad) geschaffen, aufweisend eine Wascheinrichtung zum Waschen des Radfahrzeugs mit einer Waschflüssigkeit (zum Beispiel Wasser oder eine andere wasser- bzw. lösungsmittelbasierte Flüssigkeit), eine Pflegeeinrichtung zum Pflegen des Radfahrzeugs mit einem Pflegemittel (zum Beispiel Fahrradöl), und eine Abtrenneinrichtung zum zumindest teilweisen Abtrennen gebrauchter Waschflüssigkeit von gebrauchtem Pflegemittel. Dabei ist die Abtrenneinrichtung zum Sammeln von gebrauchtem Pflegemittel in einem Sammelvolumen, und insbesondere zusätzlich von gebrauchtem Reinigungsmittel und von dem Radfahrzeug abgetrennten Schmutz, ausgebildet.

Gemäß einem anderen Ausführungsbeispiel der vorliegenden Erfindung ist eine Anordnung bereitgestellt, die eine Vorrichtung mit den oben beschriebenen Merkmalen und ein Radfahrzeug (insbesondere ein Zweirad-Fahrrad oder ein Dreirad) auf der Vorrichtung aufweist.

Gemäß einem weiteren Ausführungsbeispiel der vorliegenden Erfindung ist ein System bereitgestellt, das eine Vorrichtung mit den oben beschriebenen Merkmalen und einen mit der Pflegeeinrichtung fluidisch gekoppelten oder koppelbaren Pflegemittelbehälter mit Pflegemittel (und optional einen mit einer Reinigungseinrichtung der Wasch- und Pflegevorrichtung fluidisch gekoppelten oder koppelbaren Reinigungsmittelbehälter mit Reinigungsmittel, beispielsweise ein wasserbasierter Reiniger oder ein lösungsmittelbasierter Reiniger) aufweist.

Gemäß einem weiteren Ausführungsbeispiel der vorliegenden Erfindung ist ein Verfahren zum Waschen und Pflegen eines Radfahrzeugs bereitgestellt, wobei das Verfahren ein Waschen des Radfahrzeugs mit einer Waschflüssigkeit, ein Pflegen des Radfahrzeugs mit einem Pflegemittel, und ein zumindest teilweises Abtrennen gebrauchter Waschflüssigkeit von gebrauchtem Pflegemittel aufweist.

Gemäß einem exemplarischen Ausführungsbeispiel der Erfindung kann somit ein Radfahrzeug an einer entsprechend ausgebildeten Servicestation nicht nur gewaschen, sondern auch gepflegt werden. Das Waschen kann ein Abspritzen des Radfahrzeugs mit Wasser oder einer anderen Waschflüssigkeit durch einen Benutzer beinhalten. Das Pflegen kann zum Beispiel ein Versorgen einer Kette oder eines anderen beweglichen Bauteils, etc. des Radfahrzeugs mit einem Pflegemittel (wie beispielsweise Fahrradöl, Silikon, teil- oder vollsynthetisches Fett und/oder Öl) aufweisen, während das Radfahrzeug an der Wasch- und Pflegevorrichtung angeordnet ist. Indem an der Wasch- und Pflegevorrichtung eine Vorkehrung zum Abtrennen der in der Regel in Hinblick auf eine mögliche Umweltbelastung unbedenklichen Waschflüssigkeit von möglicherweise umweltbedenklichem Pflegemittel, etc., vorgesehen ist, kann das abgetrennte Pflegemittel und dergleichen vor einem unerwünschten Abfließen in die Umgebung (zum Beispiel in die Kanalisation) bewahrt werden. Die von dem Pflegemittel abgetrennte Waschflüssigkeit hingegen kann bevorzugt in die Umgebung (zum Beispiel in die Kanalisation) abfließen, ohne dass damit eine Umweltbelastung einhergeht. Alternativ ist es auch möglich, die abgetrennte Wasserflüssigkeit in einem weiteren Waschzyklus wiederzuverwenden. Mit Vorteil kann die Abtrenneinrichtung an einer Unterseite einer Standfläche des Radfahrzeugs während des Waschens und/oder Pflegens an der Vorrichtung angeordnet sein. Abfließende Waschflüssigkeit bzw. abfließendes Pflegemittel gelangen dann von dem zu reinigenden Radfahrzeug automatisch - mithin bloß durch Schwerkraft - und ohne Benutzeraktivität zu der Abtrenneinrichtung (zum Beispiel einen Ölabscheider). Dadurch kann unbedenkliche Waschflüssigkeit wie Wasser zum Beispiel abfließen, wohingegen die Abtrenneinrichtung ein gegebenenfalls umweltbedenkliches Pflegemittel von der Waschflüssigkeit abgetrennt sammeln kann. Das zum Beispiel in einem Sammelbehälter gesammelte Pflegemittel kann dann getrennt entsorgt werden. Daher ermöglicht eine Vorrichtung gemäß einem exemplarischen Ausführungsbeispiel der Erfindung ein Reinigen eines Radfahrzeugs auf wirksame und umweltverträgliche Weise sowie mit vertretbarem Aufwand.

Insbesondere kann gemäß einem exemplarischen Ausführungsbeispiel der Erfindung eine Fahrrad-Wasch- und Pflegestation geschaffen werden, bei der Fahrradpflegeprodukte zum Einsatz kommen können und damit kontaminiertes Abwasser dennoch nicht in umweltschädigender Weise in die Umgebung abgelassen wird. Stattdessen erfolgt eine Trennung von Waschflüssigkeit (die dann unbedenklich in die Umgebung abgelassen werden kann oder zum Waschen eines Radfahrzeugs an der Vorrichtung wiederverwendet werden kann) und Pflegemitteln.

Eine Vorrichtung gemäß einem Ausführungsbeispiel der Erfindung ermöglicht an einer gemeinsamen Station ein Waschen und bevorzugt auch ein zusätzliches Reinigen des Radfahrzeugs sowie eine zügige Nachpflege desselben. Insbesondere kann zunächst ein Reinigungsmittel gezielt auf zu reinigende Teile (zum Beispiel Kette, Ritzelpaket, etc.) des Radfahrzeugs aufgebracht werden und dann mit Wasser oder einer anderen Waschflüssigkeit abgespült werden. Danach kann eine pflegende Nachbehandlung durchgeführt werden, zum Beispiel das Aufbringen eines Ölfilms als Pflegemittel auf die Kette des Radfahrzeugs. Es ist auch möglich, nachfolgend mittels Druckluft Reste der Waschflüssigkeit von dem Radfahrzeug zu entfernen und/oder gegebenenfalls eine Nachbefüllung der Reifen mit Druckluft durchzuführen. Eine solche Vorrichtung kann zum Beispiel an einer Tankstelle, einem Hotel, einer Seilbahn, einem Wohnhaus oder einem Golfplatz zum Einsatz kommen. Mit Vorteil kann eine Abrechnung, d.h. die Entrichtung einer Benutzungsgebühr der Vorrichtung, bargeldlos mittels einer App erfolgen, die auf einem portablen Kommunikationsgerät (wie zum Beispiel einem Mobiltelefon) installiert werden kann. Alternativ ist es auch möglich, die Vorrichtung so auszugestalten, dass sie auch ohne Bezahlung benutzbar ist.

Allgemeiner kann eine App auf einem (portablen oder stationären) Kommunikationsgerät zum Steuern bzw. Überwachen der Vorrichtung eingesetzt werden.

Im Weiteren werden zusätzliche exemplarische Ausführungsbeispiele der Vorrichtung, der Anordnung, des Systems und des Verfahrens beschrieben.

Gemäß einem exemplarischen Ausführungsbeispiel kann die Wascheinrichtung eine von einem Benutzer händisch handhabbare Zuführeinrichtung zum Zuführen der Waschflüssigkeit aufweisen. Mit anderen Worten kann die Wascheinrichtung ausgebildet sein, dass sie von einem Benutzer selbst gehandhabt werden kann. Aufwändige Vorkehrungen für eine Reinigung des Radfahrzeugs, wie zum Beispiel in einer herkömmlichen Autowaschanlage, sind daher entbehrlich. Stattdessen reicht es, dass der Benutzer die Zuführeinrichtung (zum Beispiel eine Wasch- oder Spritzlanze mit einem Auslass für die Waschflüssigkeit) von Hand betätigt und damit das zu reinigende Radfahrzeug abspritzt. Eine solche Zuführeinrichtung kann eine Leitung und/oder ein Rohr zum Transportieren der Waschflüssigkeit aus einem Reservoir oder von einem Wasseranschluss bis zu einer Auslassöffnung an der Zuführeinrichtung aufweisen. Auch kann eine solche Zuführeinrichtung mit einem Handgriff zum Greifen durch einen Benutzer und mit einer händisch betätigbaren Betätigungseinrichtung (zum Beispiel eine Dosierpistole) zum Aktivieren bzw. Deaktivieren eines Flusses von Waschflüssigkeit ausgerüstet werden. Die Zuführeinrichtung kann an der Wasch- und Pflegevorrichtung an einer für einen Benutzer anatomisch leicht zugänglichen Position angebracht sein. Die Zuführeinrichtung kann, wenn sie nicht in Gebrauch ist, an einer Halteeinrichtung entnehmbar gehalten werden. Eine entsprechende Halteeinrichtung kann zum Beispiel als Köcher ausgebildet sein, welcher an einem Aufnahmegehäuse angebracht sein kann, wobei die Halteeinrichtung insbesondere in Bezug auf ein in die Wasch- und Pflegevorrichtung eingebrachtes Radfahrzeug auf einer Seite (insbesondere in Bezug auf ein befestigtes Radfahrzeug) angebracht sein kann, während eine Drucklufteinrichtung in Bezug auf das eingebrachte Radfahrzeug auf der anderen Seite angebracht ist.

Gemäß einem exemplarischen Ausführungsbeispiel kann die Wascheinrichtung zum Zuführen der Waschflüssigkeit unter Druck ausgebildet sein. Ein Druck, mit dem die Waschflüssigkeit aus der Wascheinrichtung austritt, kann zum Beispiel zwischen 0,5 bar und 10 bar oder sogar zwischen 20 und 40 bar (beispielsweise ungefähr 30 bar) betragen. Es ist insbesondere möglich, die Waschflüssigkeit zunächst mit einem hohen Druck von zum Beispiel 100 bar bereitzustellen und mit einem Druckminderer den tatsächlichen Austrittsdruck der Waschflüssigkeit auf einen geringeren Wert (von zum Beispiel 30 bar) zu drosseln. Der Druck kann gemäß einem Ausführungsbeispiel von einem Benutzer oder bei Installation der Vorrichtung eingestellt und dadurch auf eine jeweils vorliegende Waschaufgabe hin angepasst werden, zum Beispiel durch eine entsprechende Betätigung der Betätigungseinrichtung.

Gemäß einem exemplarischen Ausführungsbeispiel kann die Wascheinrichtung mindestens eine Düse zum Auslassen der Waschflüssigkeit aufweisen. Somit kann die Waschflüssigkeit an der Wascheinrichtung verdüst werden, um eine verbesserte Waschwirkung zu erreichen. Eine solche Düse kann an einer Austrittsöffnung einer Wasch- oder Spritzlanze angebracht werden.

Der Druck, mit dem die Waschflüssigkeit aus der Wascheinrichtung austritt, kann beispielsweise direkt an einem Ausgang einer Düse gemessen werden. Wie oben beschrieben kann der Druck am Ausgang der Düse zum Beispiel zwischen 0,5 bar und 10 bar oder sogar zwischen 20 und 40 bar (beispielsweise ungefähr 30 bar) betragen. Es ist insbesondere möglich, die Waschflüssigkeit zunächst mit einem hohen Druck von zum Beispiel 100 bar oder 120 bar bereitzustellen und mit einem Druckminderer den tatsächlichen Austrittsdruck der Waschflüssigkeit auf einen geringeren Wert (von zum Beispiel 30 bar) an dem Ausgang der Düse zu drosseln. Der Ausgangsdruck an der Düse beträgt insbesondere unter 120 bar, insbesondere unter 55 bar. Damit wird das Risiko einer Beschädigung von sensiblen Einrichtungen des Radfahrzeugs, wie beispielsweise an Kugellagern oder an Schaltungsteilen, reduziert. Gerade mit einem Öffnungswinkel der Düse von ungefähr 15° bei oben beschriebenen Ausgangsdrücken kann somit schonend und effektiv ein Radfahrzeug gereinigt werden.

Gemäß einem exemplarischen Ausführungsbeispiel kann die Pflegeeinrichtung zum Zuführen eines Schmierstoffs als Pflegemittel ausgebildet sein. Ein solcher Schmierstoff kann zum Beispiel Fahrradöl sein, dass ein Benutzer mittels der Vorrichtung einer Fahrradkette zuführen kann, während das Radfahrzeug an einer Standfläche der Wasch- und Pflegevorrichtung angeordnet ist. Mit Vorteil kann die Pflegeeinrichtung an einer solchen Position an der Vorrichtung angeordnet sein, dass ein Benutzer, ohne sich einen Schritt bewegen zu müssen, das Radfahrzeug wahlweise waschen, pflegen oder optional auch reinigen kann. Um der Pflegeeinrichtung Pflegemittel zuführen zu können, kann zum Beispiel ein Behälter mit Pflegemittel als Teil der Wasch- und Pflegevorrichtung vorgesehen sein. Alternativ oder ergänzend zu einem Schmierstoff kann es mit einer Vorrichtung gemäß einem exemplarischen Ausführungsbeispiel der Erfindung auch möglich sein, als Pflegemittel ein Verschleißschutzmittel, etc. zuzuführen.

Gemäß einem exemplarischen Ausführungsbeispiel kann die Pflegeeinrichtung eine weitere, von einem Benutzer händisch handhabbare Zuführeinrichtung zum Zuführen des Pflegemittels aufweisen. Zum Beispiel kann ein Pflegemittel Kettenöl, Kettenwachs, Lagerfett und/oder Multifunktionsöl für bewegliche Teile des Radfahrzeugs aufweisen. Mit anderen Worten kann die Pflegeeinrichtung ausgebildet sein, dass sie von einem Benutzer selbst und daher mit geringem Aufwand gehandhabt werden kann. Somit reicht es, dass der Benutzer die Zuführeinrichtung (zum Beispiel eine weitere Lanze mit einem Auslass für das Pflegemittel) von Hand betätigt und damit auf das zu pflegende Radfahrzeug einwirkt. Eine solche Zuführeinrichtung kann eine Leitung und/oder ein Rohr zum Transportieren des Pflegemittels aus einem Reservoir bis zu einer Auslassöffnung an der Zuführeinrichtung aufweisen. Auch kann eine solche Zuführeinrichtung mit einem Handgriff zum Greifen durch einen Benutzer und mit einer händisch betätigbaren Betätigungseinrichtung zum Aktivieren bzw. Deaktivieren eines Flusses von Pflegemittel versehen sein. Die Zuführeinrichtung für das Pflegemittel kann an der Wasch- und Pflegevorrichtung an einer für einen Benutzer anatomisch leicht zugänglichen Position angebracht sein, zum Beispiel an einer Wand eines Aufnahmegehäuses oder an einer Spritzschutzwand. Diese Zuführeinrichtung kann, wenn sie nicht in Gebrauch ist, an einer separatem Halteeinrichtung entnehmbar gehalten werden.

Gemäß einem exemplarischen Ausführungsbeispiel kann die Pflegeeinrichtung mindestens eine Bürste an einem Auslass zum Auslassen des Pflegemittels aufweisen. Es hat sich als besonders vorteilhaft erwiesen, wenn an einem Auslass des Pflegemittels eine Bürste vorgesehen ist, die ein gleichzeitiges Versorgen eines Fahrradteils (insbesondere einer Fahrradkette) mit dem Pflegemittel und ein mechanisches Bearbeiten dieses Fahrradteils mit einer Bürste gestattet. Es ist auch möglich, eine zweite Bürste (zum Beispiel zum Reinigen) vorzusehen. Auf diese Weise kann das Pflegemittel an dem einschlägigen Fahrradteil verteilt und/oder eingearbeitet werden. Simultan mit dem Zuführen des Pflegemittels kann die Bürste zum mechanischen Reinigen dieses Fahrradteils beitragen.

Gemäß einem exemplarischen Ausführungsbeispiel kann die Vorrichtung eine Reinigungseinrichtung zum Reinigen des Radfahrzeugs mit einem Reinigungsmittel aufweisen. Als Reinigungsmittel kann zum Beispiel ein Antriebsreiniger zum Reinigen von Ölschmutz, ein Bremsenreiniger zur Entfettung einer Bremse, ein Intensivreiniger mit Korrosionsschutz, ein Federgabelreiniger zum Entfernen von Mikroverschmutzungen, ein Hochdruckreiniger und/oder ein Mittel zum Schamponieren des Radfahrzeugs verwendet werden. Unter einem Reinigungsmittel wird in diesem Zusammenhang insbesondere ein Medium (weiter insbesondere eine Flüssigkeit) verstanden, das einen chemischen Konstituenten zum chemischen Reinigen des Radfahrzeugs aufweist. Während die Wirkung der Waschflüssigkeit auf einer mechanischen Einwirkung auf das Radfahrzeug beruht, kann das zusätzliche Bereitstellen eines Reinigungsmittels einen zusätzlichen Reinigungserfolg beisteuern. Zum Beispiel kann es bei Radfahrzeugen, insbesondere bei E-Bikes, vorteilhaft sein, mittels eines Antriebs-Reinigungsmittels einen ölhaltigen Schmutzfilm von einer Kette, einem Riemen oder einer anderen Antriebsform, einem Zahnkranz und/oder einem Schaltwerk zu entfernen. Die derart gereinigten Antriebsteile des Radfahrzeugs können nachfolgend mittels eines Kettenöls gepflegt werden. Dadurch kann erreicht werden, dass die Kette wieder reibungslos über Kettenblatt und Ritzel gleitet.

Gemäß einem exemplarischen Ausführungsbeispiel kann die Vorrichtung eine Drucklufteinrichtung zum Zuführen von Druckluft zu dem Radfahrzeug aufweisen. Insbesondere kann die Drucklufteinrichtung zum Aufpumpen eines Reifens des Radfahrzeugs und/oder zum Entfernen von Waschflüssigkeit von dem Radfahrzeug ausgebildet sein. Gegebenenfalls kann Druckluft auch zum Unterstützen des Waschens und/oder Reinigens verwendet werden. Die Drucklufteinrichtung kann wiederum eine von einem Benutzer händisch betätigbare Zuführeinrichtung aufweisen, die ein dosiertes Zuführen von Druckluft aus einer Druckluftflasche, einem Kompressor oder dergleichen der Vorrichtung gestattet. Die Drucklufteinrichtung kann an einer derartigen Position an der Vorrichtung angebracht sein, dass ein Benutzer - ohne sich zu bewegen - die Wascheinrichtung, die Pflegeeinrichtung, die Reinigungseinrichtung oder die Drucklufteinrichtung betätigen kann.

Erfindungsgemäß ist die Abtrenneinrichtung zum Sammeln von gebrauchtem Pflegemittel, und insbesondere zusätzlich von gebrauchtem Reinigungsmittel und von dem Radfahrzeug abgetrennten Schmutz, ausgebildet.

Die Abtrenneinrichtung kann nicht nur Waschflüssigkeit von Pflegemittel abtrennen, sondern insbesondere die Waschflüssigkeit auch von Reinigungsmittel abtrennen. In der Regel sollen Pflegemittel bzw. Reinigungsmittel nicht an die Umgebung abgegeben werden und können daher von der Abtrenneinrichtung mit Vorteil separat von der Waschflüssigkeit gesammelt werden. Nach Sammeln in einem Sammelbehälter oder dergleichen können Pflegemittel und Reinigungsmittel sowie Schmutz dann getrennt entsorgt werden, wohingegen die abgetrennte Waschflüssigkeit unbedenklich ist und zum Waschen wiederverwendet werden kann oder in die Umgebung abgelassen werden kann.

Gemäß einem bevorzugten exemplarischen Ausführungsbeispiel kann die Abtrenneinrichtung zum selektiven Ablassen abgetrennter Waschflüssigkeit in eine Umgebung, insbesondere in eine Kanalisation, ausgebildet sein. Dies hat Vorteile: Zum einen ermöglicht dies eine einfache und gleichzeitig umweltverträgliche Entsorgung der Waschflüssigkeit, insbesondere Wasser. Darüber hinaus beseitigt dies jeglichen Aufwand im Zusammenhang mit einer Wiederaufbereitung oder einem Recycling von Waschflüssigkeit. Insbesondere ein Ablassen abgetrennter Flüssigkeit nach unten hin ist mit äußerst geringem technischem Aufwand möglich, zum Beispiel unterstützt durch die Gravitationskraft. Darüber hinaus ist dies auch ohne Mitwirkung eines Benutzers erreichbar, d.h. mit hohem Benutzerkomfort und fehlerrobust. Gebrauchte Waschflüssigkeit kann einfach nach unten abfließen, dort an der Abtrenneinrichtung von Pflegemittel bzw. Reinigungsmittel abgetrennt werden und schließlich weiter nach unten in die Umgebung der Vorrichtung abfließen. Gegebenenfalls kann ein Abflussschlauch an der Unterseite der Vorrichtung angebracht werden, der das Abfließen der abgetrennten Waschflüssigkeit an eine Zielposition (zum Beispiel in die Kanalisation) ermöglicht. Optional kann vor dem Abfließen der abgetrennten Waschflüssigkeit dieselbe noch durch einen Schmutzfilter oder dergleichen geführt werden, um die Waschflüssigkeit weiter zu reinigen.

Gemäß einem alternativen Ausführungsbeispiel kann die Abtrenneinrichtung zum Rückführen abgetrennter und optional gereinigter Waschflüssigkeit an die Wascheinrichtung ausgebildet sein. Hierfür kann eine Fördereinrichtung (zum Beispiel eine Flüssigkeitspumpe) zum Einsatz kommen, die nach unten abfließende und abgetrennte Waschflüssigkeit zurück zu einem Reservoir oder direkt zu einer Wasch- oder Spritzlanze der Wascheinrichtung zurückführt. Es ist auch möglich, einen Schmutzfilter und/oder einen anderen Reinigungsmechanismus an einer Rückführleitung mit wiederzuverwendender Waschflüssigkeit vorzusehen.

Gemäß einem exemplarischen Ausführungsbeispiel kann die Abtrenneinrichtung einen Filter aufweisen. Mit einem solchen Filter können Schmutzpartikel oder dergleichen aus dem abfließenden Medium, das zum Waschen, Pflegen und/oder Reinigen des Radfahrzeugs eingesetzt worden ist, abgefiltert werden.

Gemäß einem exemplarischen Ausführungsbeispiel kann die Abtrenneinrichtung einen Schmierstoffabscheider aufweisen. Ein solcher Schmierstoffabscheider bzw. Leichtflüssigkeitsabscheider kann eine Abwasserbehandlungsanlage in Form eines Beckens sein, in dem Leichtflüssigkeiten (zum Beispiel Kettenöl) durch Aufschwimmen und Rückhaltung an einer Tauchwand selektiv abgeschieden werden. Die mit dem Pflegemittel verunreinigte Waschflüssigkeit strömt unter der Tauchwand hindurch, wobei das Pflegemittel geringerer Dichte aufschwimmt und die Tauchwand nicht passieren kann.

Gemäß einer exemplarischen Ausführung kann der Schmierstoffabscheider ein Becken, eine erste Tauchwand, welche ein erstes Kompartiment und ein zweites Kompartiment in dem Becken voneinander trennt, und eine zweite Tauchwand, welche das zweite Kompartiment und ein drittes Kompartiment des Beckens voneinander trennt, aufweisen. Dabei kann die erste Tauchwand im Bodenbereich des Beckens einen Durchgang (zum Beispiel einen Schlitz oder ein Loch) aufweisen, und die zweite Tauchwand kann im Bodenbereich des Beckens einen weiteren Durchgang aufweisen, sodass die mit dem Pflegemittel, sonstigen fetthaltigen Verunreinigungen oder mit aufschwimmenden Schmutzpartikeln verunreinigte Waschflüssigkeit unter den Tauchwänden hindurch strömen kann, wobei das Pflegemittel geringerer Dichte, die sonstigen fetthaltigen Verunreinigungen oder die aufschwimmenden Schmutzpartikeln aufschwimmen und die Tauchwände nicht passieren können. Mit Vorteil kann in dem Ausführungsbeispiel die zweite Tauchwand von dem Boden des Beckens ausgehend höher sein als die erste Tauchwand. Dadurch kann ein Strömen der Waschflüssigkeit mit dem aufschwimmenden Pflegemittel (oder anderer Bestandteile geringerer Dichte) nicht über die zweite Tauchwand in das dritte Kompartiment verhindert werden.

Gemäß einem exemplarischen Ausführungsbeispiel kann die Vorrichtung ein Aufnahmegehäuse zum Aufnehmen eines mit der Pflegeeinrichtung fluidisch gekoppelten Pflegemittelbehälters mit Pflegemittel, und optional zum Aufnehmen eines mit einer Reinigungseinrichtung fluidisch gekoppelten Reinigungsmittelbehälters mit Reinigungsmittel aufweisen. Indem die genannten Pflegebehälter in einem (vorzugsweise gemeinsamen) Gehäuse aufgenommen sind, sind sie vor Verschmutzung oder Beschädigung während Waschens und Pflegens des Radfahrzeugs zuverlässig geschützt. Auch vereinfacht das Unterbringen der Behälter in einem Gehäuse ein ungestörtes sensorisches Überwachen des Füllstands der Flüssigkeiten in dem jeweiligen Behälter, insbesondere mittels Füllstandsensoren. Gemäß einer vorteilhaften Alternative zum Vorsehen von Sensoren zum Überwachen des Füllstands der Flüssigkeiten der Behälter ist es möglich, die aktiven Betriebszeiträume zu summieren, während denen eine jeweilige Flüssigkeit aus einem jeweiligen Behälter gefördert wird. Kennt man zudem die Flussrate der jeweiligen Flüssigkeit, so kann aus der Flussrate und den summierten bzw. integrierten Betriebszeiträumen der Gesamtverbrauch der Flüssigkeit abgeschätzt werden. Ist zudem das Fassungsvermögen des Behälters bekannt, kann hieraus abgeleitet werden, wann der Füllstand des Behälters unter einen kritischen Wert absinkt. Zum Beispiel können einer App auf einem portablen Kommunikationsgerät jeweils Informationen übermittelt werden, wie lange die Vorrichtung in einem Waschmodus, einem Pflegemodus und/oder einem Reinigungsmodus betrieben wurde. Die Software der App kann dann einen Restfüllstand der zugehörigen Behälter zumindest abschätzen.

Gemäß einem exemplarischen Ausführungsbeispiel kann die Vorrichtung eine Begrenzungswand an einer einem Benutzer abgewandten Seite der Vorrichtung zum Begrenzen eines Flusses von Waschflüssigkeit und Pflegemittel heraus aus der Vorrichtung aufweisen. Anschaulich kann eine solche Begrenzungswand als Spritzschutz dienen und ein gegebenenfalls umweltbedenkliches Abfließen erheblicher Mengen verwendeter Wasch-, Reinigungs- bzw. Pflegemedien heraus aus der Vorrichtung unterdrücken. Auf die Begrenzungswand eintreffende Medien fließen über eine Standfläche für das Radfahrzeug und eine Abflussöffnung an der Standfläche nach unten ab und führen ohne Mitwirkung des Benutzers zu einer umweltgerechten Handhabung dieser Medien.

Ein vollständiges Umschließen des Radfahrzeugs durch vollumfänglich umgebende Wände ist bei einer nach oben offenen Wasch- und Pflegevorrichtung gemäß einem exemplarischen Ausführungsbeispiel der Erfindung entbehrlich. Somit ist eine solche Vorrichtung mit besonders geringem Aufwand herstellbar.

Gemäß einem exemplarischen Ausführungsbeispiel können die Begrenzungswand und das Aufnahmegehäuse an aneinander angrenzenden Seiten der in Draufsicht im Wesentlichen rechteckförmigen Vorrichtung angeordnet sein und die beiden verbleibenden Seiten offen sein. Mit anderen Worten kann die vorzugsweise nach oben offene Vorrichtung entlang ihres Umfangs an zwei Seiten geschlossen und an zwei anderen Seiten offen sein. An einer offenen langen Seite kann ein Benutzer während des Waschens und Pflegens des Radfahrzeugs stehen und seitlich auf das an einer Standfläche angebrachte Radfahrzeug blicken. An einer offenen kurzen Seite kann das Radfahrzeug rollend auf die Standfläche befördert werden. Ein Benutzer blickt dann im Betrieb seitlich auf das montierte Radfahrzeug, was den Vorgang des Waschens, Reinigung und Pflegens vereinfacht. An einer geschlossenen kurzen Seite kann das Gehäuse mit den Behältern angeordnet sein. An einer geschlossenen langen Seite kann die als Spritzschutz dienende Begrenzungswand angeordnet sein, d.h. gegenüberliegend dem Benutzer. Eine solche Geometrie führt zu einer einfachen Konstruktion und synergistisch zu einer intuitiven und für einen Benutzer anatomisch vorteilhaften Handhabung von Radfahrzeug sowie Wasch- und Pflegevorrichtung.

Erfindungsgemäß weist die Vorrichtung eine Montagebasis zum Montieren eines zu waschenden und zu pflegenden Radfahrzeugs auf.

Die Montagebasis kann eine Standfläche für das Radfahrzeug bilden. Mit Vorteil kann die Montagebasis so ausgebildet sein, dass ein zu waschendes, zu pflegendes und/oder zu reinigendes Radfahrzeug an der Montagebasis lösbar befestigbar ist. Dies führt zu einer hohen Betriebssicherheit.

Erfindungsgemäß weist die Montagebasis einen Auslass zum Auslassen von gebrauchter Waschflüssigkeit, von gebrauchtem Pflegemittel, von gebrauchtem Reinigungsmittel und gegebenenfalls Schmutz in die an einer Unterseite der Montagebasis angebrachten, Abtrenneinrichtung auf. Besonders bevorzugt ist es, den Auslass und die Abtrenneinrichtung zum rein passiven Auslassen der gebrauchten Medien anzuordnen und auszubilden, d.h. ohne motorischen Antrieb zum Fördern der auszulassenden Medien und ohne das Erfordernis einer Benutzeraktivität beim Ablassen und Abtrennen. Durch eine entsprechende Anordnung von Auslass und Abtrenneinrichtung kann der Abfluss der Medien entlang eines definierten Pfades rein durch die Gravitationskraft erfolgen. Dies erlaubt eine einfache und wenig fehleranfällige Ausgestaltung der Wasch- und Pflegevorrichtung mit äußerst geringem Wartungsaufwand. Die beim Waschen, Pflegen bzw. Reinigen verbrauchten Medien können daher automatisch nach unten abfließen und der oben beschriebenen Abtrennung ohne Mitwirkung des Benutzers zugeführt werden.

Gemäß einem exemplarischen Ausführungsbeispiel kann die Montagebasis ein Rollenlager zum rollfähigen Lagern eines Hinterrads des Radfahrzeugs aufweisen. Befindet sich das Radfahrzeug an einer Soll-Position auf der Montagebasis, kann das Hinterrad auf dem Rollenlager aufliegen. Eine Bewegung des Hinterrads führt dann zu keiner Vorwärtsbewegung des Radfahrzeugs. Auf diese Weise ist es möglich, zum Beispiel die Kette des Radfahrzeugs im Bereich des Hinterrads in Bewegung zu setzen, ohne dass das Radfahrzeug sich dadurch als Ganzes in Bewegung setzt. Eine solche Kettenbewegung ist zum Beispiel zum Reinigen der Kette bzw. zum pflegenden Auftragen von Kettenöl oder einem anderen Schmiermittel vorteilhaft.

Gemäß einem exemplarischen Ausführungsbeispiel kann die Montagebasis eine Fixiereinrichtung zum Fixieren eines Vorderrads (Vorderreifens) des Radfahrzeugs aufweisen. Insbesondere kann die Fixiereinrichtung einen Klappmechanismus aufweisen, der bei Einführen des Vorderrads umklappt und das Vorderrad dadurch an der Montagebasis fixiert. Ein Fixieren des Radfahrzeugs während des Wasch- und Reinigungsvorgangs ist vorteilhaft, um ein Wegrollen zu vermeiden und ein gezieltes Bearbeiten zu ermöglichen. In besonders einfacher und für einen Benutzer intuitiver sowie fehlerunempfindlicher Weise kann dies erreicht werden, wenn ein Benutzer durch bloßes Rollen des Radfahrzeugs auf die Montagebasis eine im Wesentlichen L-förmige Fixiereinrichtung zum Umklappen (zum Beispiel um 90° oder um einen anderen geeigneten Winkel) bringt und dadurch die Fixierung auslöst. Anschaulich kann durch das Reifengewicht des Radfahrzeug die Fixiereinrichtung zum Umklappen gebracht werden, womit der Reifen selbsttätig fixiert werden kann. Alternativ kann die Fixiereinrichtung auch in anderer Weise ausgebildet sein, zum Beispiel durch zwei voneinander in Radbreite beabstandete Klemmbacken, zwischen die ein Vorderrad des Radfahrzeugs reversibel geklemmt werden kann.

Gemäß einem Ausführungsbeispiel kann der Klappmechanismus der Fixiereinrichtung eine erste Radführung und eine zweite Radführung aufweisen, wobei der Klappmechanismus um eine Lagerachse umklappbar ist, wobei die Lagerachse zwischen der ersten Radführung und der zweiten Radführung ausgebildet ist. Dabei können die erste Radführung und die zweite Radführung an der Lagerachse zueinander abgewinkelt sein, sodass sich z.B. die oben beschriebene L-Form ergibt. Der Klappmechanismus kann derart ausgebildet sein, dass die erste Radführung in einem kraftfreien Zustand auf der Ebene der Montagebasis aufliegt und dass in einer Aufrollrichtung eines Radfahrzeugs auf die erste Radführung und die abgewinkelte zweite Radführung die erste Radführung vor der zweiten Radführung angeordnet ist. Vorteilhaft kann bei fortgesetzter Rollbewegung das Vorderrad den Klappmechanismus um die Lagerachse umklappen und die zweite Radführung auf die Montagebasis drücken, sodass die erste Radführung von der Montagebasis weggeklappt ist. Um an möglichst viele unterschiedliche Reifengrößen unterschiedlicher Radfahrzeuge angepasst zu sein, kann zumindest die erste Radführung eine Grundfläche und zwei seitliche Wandungen aufweisen, die sich entlang einer Erstreckungsrichtung von der Grundfläche aus erstrecken, um zwischen ihnen das Vorderrad aufzunehmen. Dabei vergrößert sich der Abstand der zwei seitlichen Wandungen zueinander entlang der Erstreckungsrichtung und die seitlichen Wandungen der ersten Radführung sind dabei derart auf der Grundfläche angeordnet, dass sich ein Abstand der beiden seitlichen Wandungen zueinander an der Grundfläche in Aufrollrichtung verkleinert. So lassen sich ohne weitere Anpassungen besonders vorteilhaft Reifen unterschiedlicher Größe in der Fixiervorrichtung fixieren. Gemäß einem exemplarischen Ausführungsbeispiel kann die Vorrichtung eine, insbesondere klappbare, geneigte Platte zum Überführen des Radfahrzeugs auf die Montagebasis aufweisen. Anschaulich kann das zu waschende bzw. zu pflegende Radfahrzeug über eine schiefe Ebene auf die Montagebasis aufgerollt werden, ohne dass einem Benutzer ein unbequemes Heben des Radfahrzeugs zugemutet werden muss. Dies vereinfacht ebenfalls den Betrieb der Vorrichtung für einen Benutzer.

Gemäß einem exemplarischen Ausführungsbeispiel kann die Vorrichtung mindestens einen Staplerschuh an einer Unterseite der Montagebasis zum Transportieren der Vorrichtung aufweisen, insbesondere mittels eines Gabelstaplers. Bei dieser Ausgestaltung kann die Vorrichtung als Ganzes in einfacher Weise durch einen Gabelstapler gehandhabt werden, ohne dass zum Transportieren der Vorrichtung an einen Zielort ein aufwändiges Zerlegen der Vorrichtung in ihre Einzelteile nötig ist. Insbesondere kann durch diese Anordnung der Staplerschuhe eine Beschädigung der Vorrichtung beim Transport wirksam vermieden werden. Alternativ kann der mindestens eine Stapelschuh auch weggelassen werden. Es ist zum Beispiel alternativ oder ergänzend möglich, eine Führungsschiene für einen Hubwagen vorzusehen.

Gemäß einem exemplarischen Ausführungsbeispiel kann die Vorrichtung Rollen an einer Unterseite der Montagebasis zum rollenden Fortbewegen der gesamten Vorrichtung aufweisen. Wenn die Vorrichtung rollbar ausgebildet ist, hat dies Vorteile im Hinblick auf Montage, Wartung und Reinigung der Vorrichtung und erlaubt eine flexible Verwendung an einem beliebigen unveränderlichen Einsatzort.

Somit kann die Vorrichtung als mobile Vorrichtung zum Transportieren an einen variablen Einsatzort ausgebildet sein.

Gemäß einem exemplarischen Ausführungsbeispiel kann die Vorrichtung eine Benutzerschnittstelle zum Anwählen eines von mehreren Betriebsmodi der Vorrichtung aufweisen. Eine solche Benutzerschnittstelle kann zum Beispiel eine Mehrzahl von Auswahltasten aufweisen, die ein Benutzer drücken oder anwählen kann, um verschiedene Modi auszuwählen. Gemäß einem Ausführungsbeispiel kann ein Benutzer durch Betätigen einer jeweiligen Auswahltaste (oder dergleichen) der Benutzerschnittstelle zum Beispiel einen Dampfstrahlmodus, einen Reinigungsflüssigkeitsmodus, einen Antriebspflegemodus, einen Ölzufuhrmodus, einen Druckluftmodus oder einen Notstoppmodus anwählen. Die Benutzerschnittstelle kann jedoch auch in anderer Weise ausgebildet sein, zum Beispiel mittels eines Touchscreens, durch Sprachsteuerung, oder durch Bedienung mittels eines portablen Geräts (wie zum Beispiel eines Smartphones) mit einer darauf installierten App oder sonstigen Software. Mit Vorteil kann die Benutzerschnittstelle an dem besagten Aufnahmegehäuse angebracht sein. Dies führt zu einer räumlichen Nähe zu einer ebenfalls in dem Aufnahmegehäuse unterbringbaren Steuereinrichtung zum Steuern der Vorrichtung und daher zu kurzen Signalwegen und einer kompakten Konfiguration. Außerdem erhöht das Anbringen der Benutzerschnittstelle an dem Aufnahmegehäuse den Benutzerkomfort.

Gemäß einem exemplarischen Ausführungsbeispiel kann die Vorrichtung eine Steuereinrichtung zum Steuern der Vorrichtung und ein (bevorzugt portables oder alternativ stationäres) Kommunikationsgerät zum, insbesondere bidirektionalen, Kommunizieren mit der Steuereinrichtung aufweisen. Eine solche Steuereinrichtung kann zum Beispiel ein Prozessor sein, der den Betrieb der Vorrichtung steuert oder koordiniert. Das (insbesondere portable) Kommunikationsgerät kann zum Beispiel ein Mobilfunkgerät (insbesondere ein Smartphone) mit einer App (oder einer anderen Software) zum Kommunizieren mit der Steuereinrichtung sein. Alternativ kann das (insbesondere portable) Kommunikationsgerät ein Tablet, ein PDA, ein Laptop, ein Server oder ein anderes kommunizierfähiges tragbares oder stationäres Gerät sein. Die Kommunikation zwischen Steuereinrichtung und (vorzugsweise portablem) Kommunikationsgerät kann drahtgebunden oder vorzugsweise drahtlos erfolgen. Eine drahtlose Kommunikation kann zum Beispiel über ein Mobilfunknetzwerk oder das öffentliche Internet erfolgen, oder über ein Intranet. Das portable Kommunikationsgerät kann zum Beispiel von einem Benutzer der Vorrichtung bedient werden, um die Vorrichtung während ihrer Benutzung zu steuern. Alternativ oder ergänzend ist es aber auch möglich, dass ein portables oder stationäres Kommunikationsgerät von einem Betreiber der Vorrichtung bedient wird, um den Betrieb der Vorrichtung (zum Beispiel den Füllstand von Betriebsmitteln) per Fernwartung zu überwachen.

Gemäß einem exemplarischen Ausführungsbeispiel kann die App ausgebildet sein, mittels Kommunizierens mit der Steuereinrichtung eine Inbetriebnahme der Vorrichtung zu initiieren, insbesondere nach elektronischer Entrichtung einer Nutzungsgebühr über die App. Anders ausgedrückt kann eine Benutzungsgebühr, die ein Benutzer für die Benutzung der Vorrichtung bezahlt, über die App entrichtet werden. Dies vereinfacht für einen Benutzer die Verwendung der Vorrichtung. Alternativ kann die Entrichtung einer Benutzungsgebühr bei der Vorrichtung durch Bargeld bzw. Bezahlkarten erfolgen. Es ist auch möglich, dass die Vorrichtung bzw. Anlage ganz ohne Bezahlsystem betrieben wird (zum Beispiel in einem Hotel, wo den Gästen die Benutzung der Vorrichtung ohne gesonderte Gebühr angeboten wird). Eine einzige App, die auf einem einzigen portablen Kommunikationsgerät gespeichert ist, kann für die benutzerdefinierte Steuerung bzw. den Benutzerbetrieb der Vorrichtung ausreichend sein. Beispielsweise kann eine solche App von einem Benutzer, der erstmals die Vorrichtung benutzen möchte, aus einem App-Store oder dergleichen heruntergeladen und nach Registrierung auf dem Kommunikationsgerät installiert werden.

Gemäß einem exemplarischen Ausführungsbeispiel kann die App ausgebildet sein, mittels Kommunizierens mit der Steuereinrichtung Informationen über einen Restbestand mindestens eines Betriebsmittels (zum Beispiel des Pflegemittels in einem Pflegemittelbehälter, eines Reinigungsmittels in einem Reinigungsmittelbehälter und/oder von Druckluft in einer Druckluftflasche) der Vorrichtung abzurufen. An der Vorrichtung können Sensoren (zum Beispiel für Füllstandsmessgeräte) zum Messen und Überwachen des Füllstands der einzelnen Medien zum Betrieb der Wasch- und Pflegevorrichtung vorgesehen sein. Erreicht der Füllstand eines Behälters (zum

Beispiel mit Pflegemittel oder Reinigungsmittel oder mit Druckluft) einen kritischen Wert, kann die Steuereinrichtung dies über ein Kommunikationsnetzwerk dem (portablen oder stationären) Kommunikationsgerät mit dessen App oder sonstiger Software zur Kenntnis bringen. Ein Betreiber der Vorrichtung kann dann auch von entfernter Position aus rechtzeitig die erforderlichen Maßnahmen ergreifen (zum Beispiel nach Bestellung oder nach Füllung der Behälter), um ein Entleeren der Betriebsmittel zu vermeiden und um einen kontinuierlichen Betrieb der Vorrichtung zu ermöglichen. In einer Datenbank können Informationen betreffend den Füllstand gespeichert werden und zum Beispiel einem Zulieferer der Betriebsmittel zugänglich gemacht werden. Auf diese Weise können eine Nachbefüllung bzw. Nachlieferung immer rechtzeitig durchgeführt werden.

Gemäß einem weiteren Ausführungsbeispiel kann mittels der App ein Aufstell-Standort der Vorrichtung ermittelt werden, indem die Vorrichtung mittels Kommunizierens mit einer externen Kommunikationseinheit die eigene Position weitergibt (z.B. mittels Nutzung mobilen Internets oder GPS). Diese Daten können dann mittels der App von der Kommunikationseinheit abgerufen werden und so der Aufstell-Standort z.B. der nächstgelegenen Vorrichtung ermittelt werden.

Im Folgenden werden exemplarische Ausführungsbeispiele der vorliegenden Erfindung mit Verweis auf die folgenden Figuren detailliert beschrieben.
Figur 1 zeigt eine räumliche Ansicht einer Wasch- und Pflegevorrichtung mit einem darauf angeordneten Radfahrzeug gemäß einem exemplarischen Ausführungsbeispiel der Erfindung.
Figur 2 zeigt eine andere räumliche Ansicht der Wasch- und Pflegevorrichtung für ein Radfahrzeug gemäß Figur 1.
Figur 3 zeigt eine räumliche Ansicht einer Wasch- und Pflegevorrichtung für ein Radfahrzeug gemäß einem anderen exemplarischen Ausführungsbeispiel der Erfindung.
Figur 4 zeigt eine andere räumliche Ansicht der Wasch- und Pflegevorrichtung gemäß Figur 3.
Figur 5 zeigt eine räumliche Ansicht einer Abtrenneinrichtung einer Wasch- und Pflegevorrichtung gemäß einem exemplarischen Ausführungsbeispiel der Erfindung.
Figur 6 zeigt einen Vorderreifen-Montageabschnitt einer Wasch- und Pflegevorrichtung gemäß einem exemplarischen Ausführungsbeispiel der Erfindung zum Montieren eines Vorderreifens eines Radfahrzeugs in einem Zustand, in dem der Vorderreifen des Radfahrzeugs an der Vorrichtung montiert ist.
Figur 7 zeigt den Vorderreifen-Montageabschnitt gemäß Figur 6 in einem Zustand, in dem kein Vorderreifen an der Vorrichtung montiert ist.
Figur 8 zeigt einen Hinterreifen-Montageabschnitt einer Wasch- und Pflegevorrichtung gemäß einem exemplarischen Ausführungsbeispiel der Erfindung zum Montieren eines Hinterreifens eines Radfahrzeugs in einem Zustand, in dem der Hinterreifen des Radfahrzeugs an der Vorrichtung montiert ist.
Figur 9 zeigt eine schematische Ansicht einer Wasch- und Pflegevorrichtung gemäß einem exemplarischen Ausführungsbeispiel der Erfindung.
Figur 10 zeigt eine Abtrennvorrichtung mit zwei Tauchwänden gemäß einer exemplarischen Ausführung.
Figur 11 zeigt eine Fixiereinrichtung mit einem Klappmechanismus gemäß einem Ausführungsbeispiel, wie sie bereits in einer weiteren Ausführung in den Figuren 6 und 7 zu sehen ist. Gleiche oder ähnliche Komponenten in unterschiedlichen Figuren sind mit gleichen Bezugsziffern versehen.

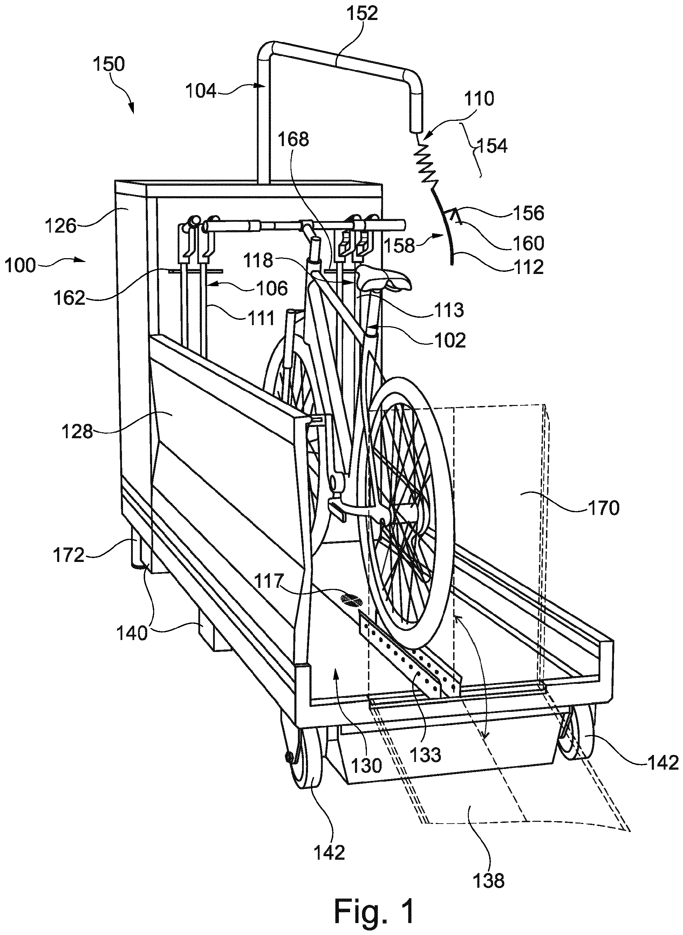

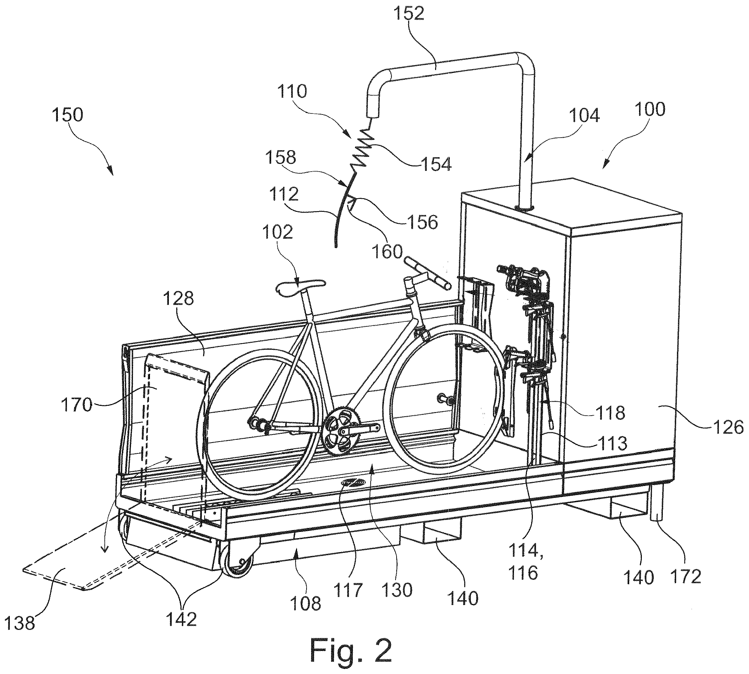

**Figur 1** zeigt eine räumliche Ansicht einer Anordnung 150 aus einer Wasch- und Pflegevorrichtung 100 und einem hier als zweirädriges Fahrrad ausgebildeten Radfahrzeug 102 gemäß einem exemplarischen Ausführungsbeispiel der Erfindung. **Figur 2** zeigt eine andere räumliche Ansicht der als Fahrradpflegestation ausgebildeten Wasch- und Pflegevorrichtung 100 gemäß Figur 1.

Die dargestellte Wasch- und Pflegevorrichtung 100 weist eine Wascheinrichtung 104 zum Waschen des Radfahrzeugs 102 mit einer Waschflüssigkeit, wie zum Beispiel Wasser, auf. Obgleich dies nicht im Detail dargestellt ist, kann die Waschflüssigkeit einem Wasseranschluss entnommen werden, an den die Wascheinrichtung 104 angeflanscht ist. Das Wasser fließt unter Druck von zum Beispiel einigen Bar durch ein Führungsrohr 152, das zum Beispiel im Wesentlichen U-förmig oder im Wesentlichen L-förmig ausgebildet sein kann und dass aus einem Aufnahmegehäuse 126 austritt. An das Führungsrohr 152 schließt sich ein flexibler Abschnitt 154 (zum Beispiel ein Schlauchabschnitt) an, der von einem Benutzer in eine gewünschte Stellung gebracht werden kann. Der flexible Abschnitt 154 bildet Teil einer händisch handhabbaren Zuführeinrichtung 110 zum Zuführen der Waschflüssigkeit zu einer gewünschten Stelle des zu waschenden Radfahrzeugs 102, entsprechend einer von einem Benutzer durchzuführenden Waschaufgabe. Ein offenes Ende der Wascheinrichtung 104, aus der durch eine Düse 112 die Waschflüssigkeit in Richtung Radfahrzeug 102 ausgelassen wird, bildet Teil einer zum Beispiel rigiden Waschlanze 158. An der Zuführeinrichtung 110 ist auch ein Handgriff 156 mit einer pistolenartigen Betätigungseinrichtung 160 gebildet, mit der ein Benutzer den Wasserfluss starten, unterbrechen bzw. gegebenenfalls sogar dosieren kann.

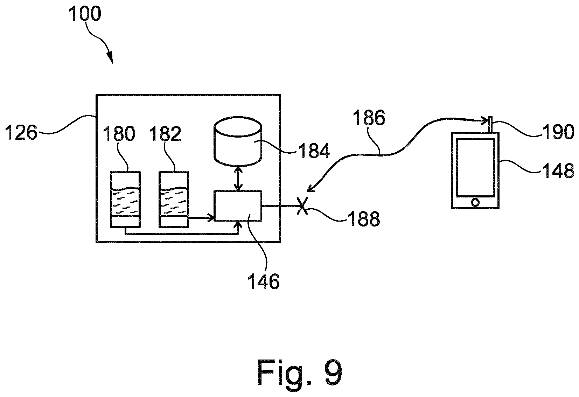

Darüber hinaus ist an der Vorrichtung 100 eine Pflegeeinrichtung 106 zum Pflegen des Radfahrzeugs 102 mit einem oder mehreren Pflegemitteln angebracht. Das oder die Pflegemittel (zum Beispiel ein Schmierstoff wie Kettenöl) ist oder sind in einem oder mehreren Behältern in Aufnahmegehäuse 126 untergebracht (vergleiche Figur 9). Auch die Pflegeeinrichtung 106 weist mindestens eine händisch handhabbare Zuführeinrichtung 111 zum Zuführen des Pflegemittels auf. Mit Vorteil kann die Zuführeinrichtung 111 der Pflegeeinrichtung 106 ebenfalls eine Lanze mit einer Bürste 114 an einem Auslass 116 zum Auslassen des Pflegemittels aufweisen. Die Zuführeinrichtung 111 kann in eine an einer vertikalen Wand des Aufnahmegehäuses 126 montierte Halteeinrichtung 162 eingesetzt und dort gehalten werden, wenn die Pflegeeinrichtung 106 nicht in Betrieb ist.

Ferner kann die Vorrichtung 100 eine Reinigungseinrichtung 118 zum Reinigen des Radfahrzeugs 102 mit einem Reinigungsmittel, zum Beispiel in Form einer chemischen Reinigungsflüssigkeit, aufweisen. Das oder die Reinigungsmittel ist oder sind in einem oder mehreren Behältern in Aufnahmegehäuse 126 untergebracht, vergleiche Figur 9. Auch die Reinigungseinrichtung 118 weist mindestens eine händisch handhabbare Zuführeinrichtung 113 zum Zuführen des Reinigungsmittels auf. Die Zuführeinrichtung 113 der Reinigungseinrichtung 118 kann ebenfalls eine Lanze an einem Auslass 116 zum Auslassen des Reinigungsmittels aufweisen, sowie optional eine Bürste 114 (alternativ eine Düse). Auch die Zuführeinrichtung 113 kann in eine Halteeinrichtung 168 eingesetzt und dort gehalten werden, wenn die Reinigungseinrichtung 118 nicht in Betrieb ist. Auch die Halteeinrichtung 168 kann an der vertikalen Wand des Aufnahmegehäuses 126 montiert sein, bevorzugt neben der Halteeinrichtung 162.

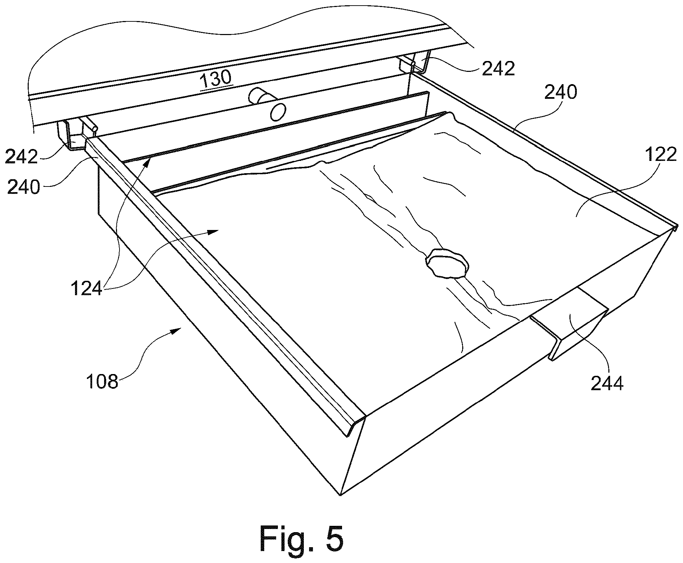

Mit Vorteil weist die Vorrichtung 100 eine Abtrenneinrichtung 108 zum teilweisen oder vollständigen Abtrennen gebrauchter Waschflüssigkeit von gebrauchtem Pflegemittel und von gebrauchtem Reinigungsmittel auf. Genauer gesagt ist die Abtrenneinrichtung 108 zum Sammeln von gebrauchtem Pflegemittel und von gebrauchtem Reinigungsmittel sowie von dem Radfahrzeug 102 beim Waschen bzw. Reinigen abgetrennten Schmutz ausgebildet. Darüber hinaus fungiert die Abtrenneinrichtung 108 zum selektiven Ablassen abgetrennter Waschflüssigkeit in eine Umgebung, zum Beispiel in die Kanalisation. Vorzugsweise beruht das Abtrennen der Waschflüssigkeit einerseits von Pflege-und Reinigungsmittel andererseits auf unterschiedlichen Dichten dieser Fluide. Dies wird bezugnehmend auf Figur 5 näher beschrieben. Alternativ oder ergänzend kann aber auch eine andere physikalische und/oder chemische Eigenschaft der Fluide verwendet werden, um sie voneinander abzutrennen. Die Medien fließen über einen Abfluss 117 an einer Montagebasis 130 nach unten in die an der Unterseite der Montagebasis 130 als Kasten angesteckte Abtrenneinrichtung 108 ab. Dort erfolgt die Abtrennung sowie das Sammeln umweltbedenklicher Komponenten (Reinigungsmittel, Pflegemittel, Schmutz, etc.), wohingegen das unbedenkliche Wasser als abgetrennte Waschflüssigkeit nach unten abfließen kann.

Wie bereits beschrieben, hat die Vorrichtung 100 ferner das Aufnahmegehäuse 126 zum Aufnehmen eines mit der Pflegeeinrichtung 106 fluidisch gekoppelten Pflegemittelbehälters mit Pflegemittel und zum Aufnehmen eines mit der Reinigungseinrichtung 118 fluidisch gekoppelten Reinigungsmittelbehälters mit Reinigungsmittel. Darüber hinaus können in und/oder an dem Aufnahmegehäuse 126 weitere Komponenten der Vorrichtung 100 untergebracht werden, zum Beispiel eine Steuereinrichtung 146 (vergleiche Figur 9) zum Steuern der Vorrichtung 100, eine Kommunikationseinrichtung zum drahtlosen Kommunizieren mit einem portablen Kommunikationsgerät 148 (vergleiche Figur 9), einer Druckluftflasche, einer oder mehrerer Druckerzeugungseinrichtungen und/oder Antriebseinrichtungen, etc. An dem Aufnahmegehäuse 126 können auch die Halteeinrichtungen 162, 168 angebracht sein. Ferner kann das Aufnahmegehäuse 126 einen vorderen Anschlag für das Radfahrzeug 102 bilden, wenn dieses auf die Montagebasis 130 aufgerollt wird.

Angrenzend an das Aufnahmegehäuse 126 ist darüber hinaus eine vertikale oder geneigte Begrenzungswand 128 an einer einem Benutzer abgewandten Seite der Vorrichtung 100 zum Begrenzen eines Flusses von Waschflüssigkeit, Schmutz, Reinigungsmittel und Pflegemittel heraus aus der Vorrichtung 100 gebildet. Anschaulich dient die Begrenzungswand 128 als Spritzschutz und fördert ein Abfließen der Betriebsmittel in die an der Unterseite der Vorrichtung 100 angebrachte Abtrenneinrichtung 108. Wie Figur 1 und Figur 2 entnommen werden kann, sind die Begrenzungswand 128 und das Aufnahmegehäuse 126 an aneinander angrenzenden Seiten der in Draufsicht im Wesentlichen rechteckförmigen Vorrichtung 100 angeordnet und dort aneinander angebracht, wohingegen die beiden verbleibenden Seiten sowie die Oberseite der Vorrichtung 100 offen sind. Die beiden offenen Seiten dienen als Arbeitsposition für einen Benutzer (nämlich die der Begrenzungswand 128 gegenüberliegende lange offene Seite) bzw. zum Zuführen des Radfahrzeugs 102 zu der Montagebasis 130 (nämlich die dem Aufnahmegehäuse 126 gegenüberliegende kurze offene Seite).

Wie bereits angesprochen, weist die Vorrichtung 100 zum Bilden einer horizontalen Standfläche für das zu bearbeitende Radfahrzeug 102 die Montagebasis 130 auf. Anders ausgedrückt dient diese zum Aufnehmen und Montieren eines zu waschenden und zu pflegenden Radfahrzeugs 102. Die Montagebasis 130 hat oberhalb der Abtrenneinrichtung 108 ein Durchgangsloch zur Bildung des Auslasses 117 zum Auslassen gebrauchter Waschflüssigkeit, von gebrauchtem Pflegemittel und von gebrauchtem Reinigungsmittel in die an einer Unterseite der Montagebasis 130 vorzugsweise abnehmbar angebrachte Abtrenneinrichtung 108.

Ferner weist die Vorrichtung 100 eine nach oben klappbare (siehe Bezugszeichen 170) geneigte Platte 138 zum Überführen des Radfahrzeugs 102 auf die Montagebasis 130 auf. Genauer gesagt kann das Radfahrzeug 102 über die als schiefe Ebene zum Überbrücken eines Höhenunterschieds zwischen einem Boden und der Montagebasis 130 ausgebildete geneigte Platte 138 bequem und ohne Heben auf die Montagebasis 130 gebracht werden.

Ebenfalls in Figur 1 und Figur 2 zu erkennen sind zum Beispiel als rechteckförmige Ringprofile ausgebildete Staplerschuhe 140 an einer Unterseite der Montagebasis 130 zum Transportieren der Vorrichtung 100 mittels eines Gabelstaplers oder dergleichen (nicht dargestellt). Zur rollenden Fortbewegung der Vorrichtung 100 sind an zwei der vier Ecken Rollen 142 an einer Unterseite der Montagebasis 130 zum Rollen der Vorrichtung 100 angebracht. An den verbleibenden beiden anderen Ecken sind Standfüße 172 gebildet, die einen sicheren Stand der Vorrichtung 100 sicherstellen.

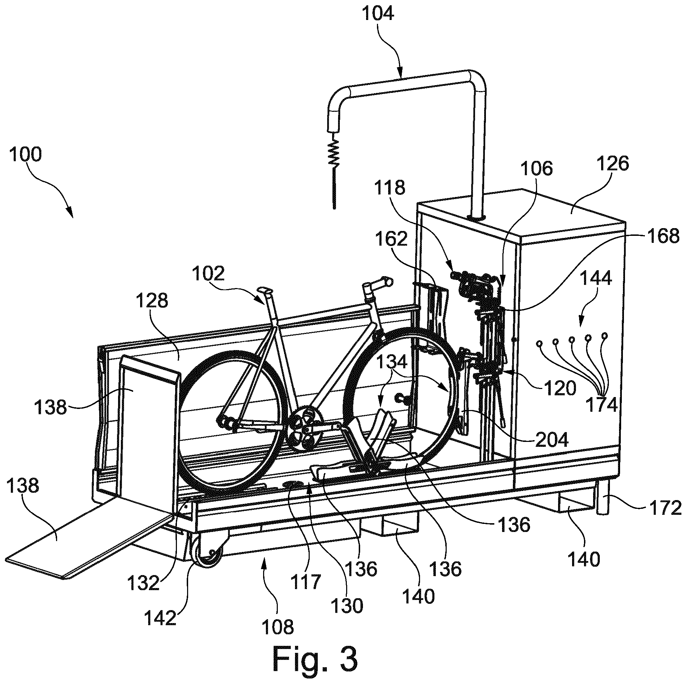

Im Betrieb der Vorrichtung 100 kann das Radfahrzeug 102 zunächst über die geneigte Platte 138 auf die Montagebasis 130 aufgerollt werden und dort gegebenenfalls befestigt werden. Eine Führungs- und Befestigungseinrichtung für das Hinterrad des Radfahrzeugs 102 ist in Figur 1 mit Bezugszeichen 133 dargestellt. Ein Benutzer kann dann einen Betriebsmodus der Vorrichtung 100 auswählen (siehe hierzu Bezugszeichen 144 und die zugehörige Beschreibung in Figur 3). Eine Steuerung bzw. Entrichtung einer Benutzungsgebühr zur Benutzung der Vorrichtung 100 kann ein Benutzer über sein Smartphone mittels einer App entrichten, vergleiche hierzu Figur 9 und zugehörige Beschreibung). Dann kann ein Wasch-, Reinigungs- und/oder Pflegevorgang begonnen werden. Zum Beispiel kann der Benutzer zunächst die Reinigungseinrichtung 118 verwenden, um das Radfahrzeug 102 mit einem chemischen Reinigungsmittel vorzureinigen, zum Beispiel zu schamponieren. Nachfolgend kann der Benutzer die Wascheinrichtung 104 verwenden, um das Reinigungsmittel und gegebenenfalls Schmutz von dem Radfahrzeug 102 mittels unter Druck zugeführtem Wasser oder dergleichen abzuwaschen. Danach kann mittels der Pflegeeinrichtung 106 zum Beispiel eine Kette des Radfahrzeugs 102 mit einem Ölfilm versehen werden. Das Radfahrzeug 102 kann dann von der Montageplattform 130 gelöst und über die geneigte Platte 138 heruntergerollt werden. Während des Betriebs fließt Waschflüssigkeit, Reinigungsmittel und Pflegemittel durch Abfluss 117 in Abtrenneinrichtung 108 ab, wo Reinigungsmittel und Pflegemittel von der Waschflüssigkeit abgetrennt und gesammelt werden. Die so aufgereinigte Waschflüssigkeit kann zum Beispiel in die Kanalisation abgeleitet werden.

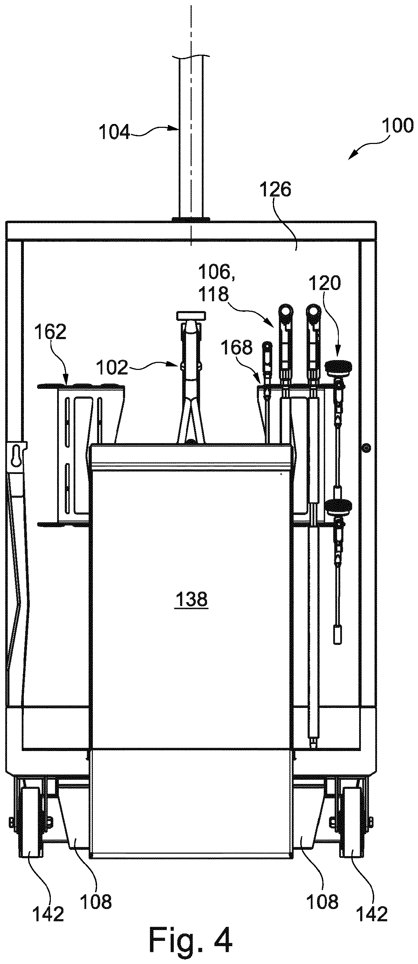

**Figur 3** zeigt eine räumliche Ansicht einer Wasch- und Pflegevorrichtung 100 für ein Radfahrzeug 102 gemäß einem anderen exemplarischen Ausführungsbeispiel der Erfindung. **Figur 4** zeigt eine andere räumliche Ansicht der Wasch- und Pflegevorrichtung 100 gemäß Figur 3.

In Figur 3 ist zu erkennen, dass die Vorrichtung 100 eine Benutzerschnittstelle 144 zum Anwählen eines von mehreren Betriebsmodi der Vorrichtung 100 aufweisen kann. Zu diesem Zweck sind gemäß Figur 3 mehrere Druckknöpfe 174 vorgesehen, von denen ein Benutzer einen jeweiligen drücken kann, um einen zugehörigen Betriebsmodus (zum Beispiel Waschen, Reinigen, Pflegen, Druckluft, Notstopp, etc.) anzuwählen.

Mit der Vorrichtung 100 gemäß Figur 3 und Figur 4 ist ein Reinigen, Einfetten, Einölen und Schmieren des Radfahrzeugs 102 möglich. Die vorzugsweise einen Ölabscheider aufweisende Abtrenneinrichtung 108 erlaubt das Erzeugen eines umweltverträglichen Abwassers. Wenn die Oberflächen der Vorrichtung 100 aus Edelstahl gebildet werden, kann die Vorrichtung 100 auch im Freien stationiert werden und ermöglicht eine hohe Witterungsbeständigkeit. An dem Aufnahmegehäuse 126 kann auch ein Stromanschluss und/oder ein Wasseranschluss zum Anschließen an eine Strom- und/oder Wasserversorgung vorgesehen sein. Die Handhabung der Vorrichtung 100 ist selbsterklärend und für einen Benutzer sehr intuitiv. Wie in Figur 9 näher beschrieben wird, ist ein bargeldloses Bezahlen per App möglich. Die Reinigung und Pflege eines Radfahrzeugs 102 kann mit der Vorrichtung 100 zum Beispiel in 5 bis 7 Minuten erfolgen. Eine in Figur 9 näher dargestellte Steuereinrichtung 146 der Vorrichtung 100 erlaubt eine optimale und daher nachhaltige Dosierung der Betriebsmittel und kann eine rechtzeitige Nachbestellung auslösen, wenn Betriebsmittel knapp werden.

Ferner weist die Vorrichtung 100 gemäß Figur 3 eine Drucklufteinrichtung 120 zum Zuführen von Druckluft zu dem Radfahrzeug 102 auf. Die Drucklufteinrichtung 120 erhält die Druckluft zum Beispiel aus einer Druckluftflasche, die in dem Aufnahmegehäuse 126 untergebracht sein kann. Alternativ kann die Druckluft durch einen Kompressor erzeugt werden, der ebenfalls in dem Aufnahmegehäuse 126 angeordnet werden kann. Auf diese Weise ermöglicht die Drucklufteinrichtung 120 ein Aufpumpen eines Reifens des Radfahrzeugs 102. Mit Vorteil kann an der Drucklufteinrichtung 120 ein Manometer angebracht sein, um einem Benutzer den Reifendruck anzuzeigen. Darüber hinaus gestattet das Zuführen von Druckluft zu dem zu waschenden, reinigenden und/oder zu pflegenden Radfahrzeug 102 eine Entfernung von Waschflüssigkeit bzw. Staub von dem Radfahrzeug 102.

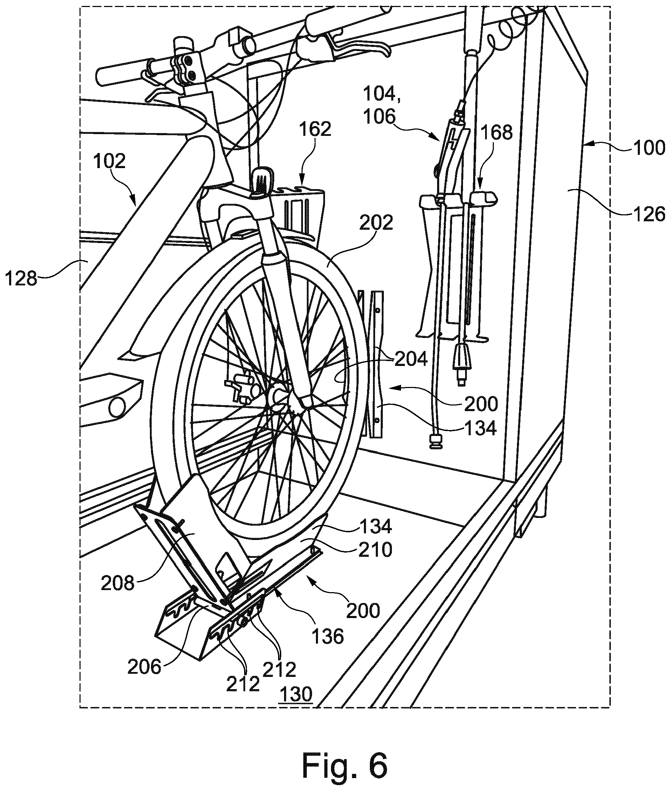

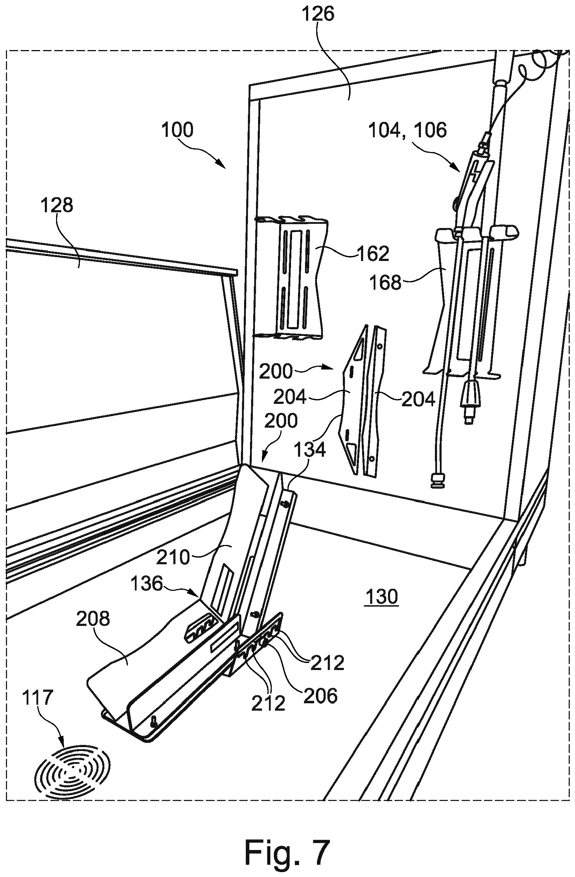

Figur 3 stellt auch dar, dass die Montagebasis 130 eine Fixiereinrichtung 134 mit Klappmechanismus 136 und Klemmmechanismus 204 zum Fixieren eines Vorderrads des Radfahrzeugs 102 aufweisen kann. Zu diesem Zweck kann die Fixiereinrichtung 134 einen in Seitenansicht im Wesentlichen L-förmigen Klappmechanismus 136 aufweisen, der bei Einführen des Vorderrads um eine drehbar gelagerte horizontale Achse umklappt und das Vorderrad dadurch lösbar an der Montagebasis 130 fixiert. Durch bloßes Zurückschieben des Radfahrzeugs 102 klappt der Klappmechanismus 136 selbsttätig zurück und gestattet dann ein rollendes Entfernen des Radfahrzeugs 102 von der Vorrichtung 100 über die geneigte Platte 138. Der Klappmechanismus 136 und der Klemmmechanismus 204 zum Befestigen eines Vorderrads des Radfahrzeugs 102 werden bezugnehmend auf Figur 6 und Figur 7 näher beschrieben.

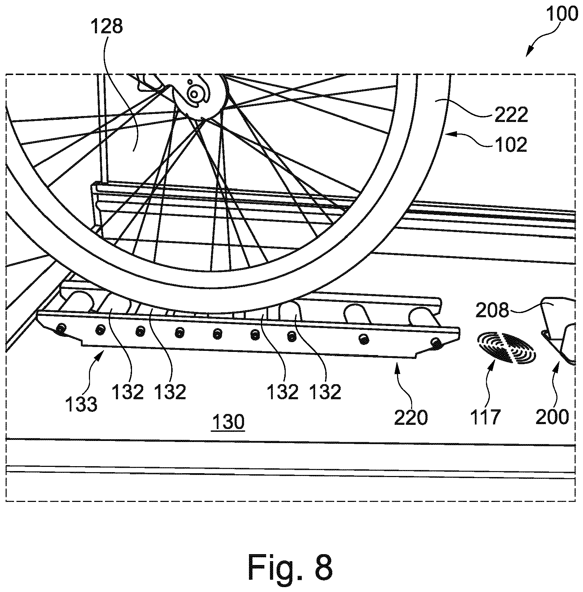

Darüber hinaus weist die Montagebasis 130 vorteilhaft ein Rollenlager 132 zum rollfähigen Lagern eines Hinterrads des Radfahrzeugs 102 auf, wenn das Vorderrad an der Fixiereinrichtung 134 fixiert ist. Wenn also das Vorderrad des Radfahrzeug 102 an der Fixiereinrichtung 134 fixiert ist und ein Bewegen des Radfahrzeug 102 als Ganzes unterdrückt, kann das Hinterrad des Radfahrzeugs 102 auf den Rollen des Rollenlagers 132 rollen. Dies ist zum Beispiel vorteilhaft, wenn ein Benutzer zum Aufbringen eines Ölfilms auf eine Kette des Radfahrzeugs 102 mittels der Pflegeeinrichtung 106 die Kette drehen möchte, ohne dass sich das Radfahrzeug 102 auf der Montagebasis 130 als Ganzes bewegt. Das Rollenlager 132 ermöglicht dies. Das in Figur 3 zu erkennende Rollenlager 132 für ein Hinterrad des Radfahrzeugs 102 wird bezugnehmend auf Figur 8 näher beschrieben.

**Figur 5** zeigt eine räumliche Ansicht einer Abtrenneinrichtung 108 einer Wasch- und Pflegevorrichtung 100 gemäß einem exemplarischen Ausführungsbeispiel der Erfindung. Bei der Darstellung gemäß Figur 5 ist die Abtrenneinrichtung 108 von der Unterseite der Montagebasis 130 entnommen. Dies ermöglicht zum Beispiel ein Reinigen der Abtrenneinrichtung 108 bzw. ein sachgemäßes und umweltgerechtes Entsorgen von abgetrennten Pflegemitteln bzw. Reinigungsmitteln, etc.

Zum Montieren der Abtrenneinrichtung 108 an der Unterseite der Montagebasis 130 können Schienenprofile 240 der Abtrenneinrichtung 108 an korrespondierenden Führungsstrukturen 242 an der Unterseite der Montagebasis 130 eingehängt werden und die Abtrenneinrichtung 108 eingeschoben werden. Um einem Benutzer das Herausnehmen der Abtrenneinrichtung 108 zu erleichtern, ist an einer dem Benutzer zugewandten Vorderseite der Abtrenneinrichtung 108 ein Handgriff 244 angebracht, an dem ein Benutzer zum Herausnehmen der Abtrenneinrichtung 108 angreifen und ziehen kann.

Wie in Figur 5 zu erkennen ist, weist die die Abtrenneinrichtung 108 ein Filter 122 zum Herausfiltern von Schmutz, etc. auf. Darüber hinaus enthält die Abtrenneinrichtung 108 einen rein mechanisch wirkenden Schmierstoffabscheider 124, der aufgrund der unterschiedlichen Dichten Leichtflüssigkeiten wie Schmieröl (zum Beispiel zum Schmieren einer Kette des Radfahrzeugs 102) von Wasser oder einer anderen Waschflüssigkeit abtrennt. Das Wasser kann dann nach unten zum Beispiel in die Kanalisation abfließen, wohingegen die leichten Flüssigkeiten aufgrund ihrer geringeren Dichte im Inneren der Abtrenneinrichtung 108 gesammelt werden.

Verschmutzte Waschflüssigkeit mit gebrauchten Pflegemitteln (insbesondere Leichtflüssigkeiten wie Öl) und mit gebrauchten Reinigungsmitteln (insbesondere Leichtflüssigkeiten wie organische Lösungsmittel) gelangen durch den Abfluss 117 an der Montagebasis 130 und einen Zulauf der Abtrenneinrichtung 108 in einen Abscheideraum. Schwerstoffe (zum Beispiel Sand, Erde bzw. Schlamm) sinken auf den Beckenboden und bilden dort einen Schlammfang. Die Leichtflüssigkeiten (zum Beispiel Öl oder organische Reinigungsflüssigkeiten) hingegen steigen zur Oberfläche auf und werden dort in einer Leichtflüssigkeitsschicht abgeschieden. Aufgereinigtes Wasser kann abfließen oder in die Kanalisation geleitet werden. Nach längerem Betrieb der Vorrichtung 100 kann die Abtrenneinrichtung 108 entnommen werden, die Leichtflüssigkeitsschicht umweltgerecht entsorgt werden und die Schwerstoffe ebenfalls getrennt entsorgt werden. Dies ist mit minimalem Aufwand und dennoch einem hohen Maß an Umweltverträglichkeit ermöglicht.

**Figur 6** zeigt einen Vorderreifen-Montageabschnitt 200 einer Wasch- und Pflegevorrichtung 100 gemäß einem exemplarischen Ausführungsbeispiel der Erfindung zum Montieren eines Vorderreifens 202 eines Radfahrzeugs 102 in einem Zustand, in dem der Vorderreifen 202 des Radfahrzeugs 102 an der Vorrichtung 100 montiert ist. **Figur 7** zeigt den Vorderreifen-Montageabschnitt 200 gemäß Figur 6 in einem Zustand, in dem kein Vorderreifen 202 an der Vorrichtung 100 montiert ist.

Am Vorderreifen-Montageabschnitt 200 ist eine hier zweikomponentig ausgebildete Fixiereinrichtung 134 angebracht (die alternativ auch einkomponentig ausgebildet sein kann, zum Beispiel nur mittels eines Klappmechanismus 136 oder nur mittels eines Klemmmechanismus 204). Die Fixiereinrichtung 134 enthält als erste Komponente einen Klemmmechanismus 204 zum Einklemmen des Vorderreifens 202 zwischen zwei gegenüberliegenden Klemmbacken. Die Klemmbacken sind bei dem dargestellten Ausführungsbeispiel an einer vertikalen Wand des Aufnahmegehäuses 126 angeordnet. Darüber hinaus enthält die Fixiereinrichtung 134 als zweite Komponente einen Klappmechanismus 136 an der Montagebasis 130. Der Klappmechanismus 136 ist entlang einer horizontal verlaufenden Lagerachse 206, die senkrecht zu einer Aufrollrichtung des Radfahrzeugs 102 auf die Vorrichtung 100 verläuft, umklappbar. Genauer gesagt ist der Klappmechanismus 136 so ausgebildet, dass er bei Einführen des Vorderrads 202 umklappt und das Vorderrad 202 dadurch an der Montagebasis 130 fixiert. Um dies zu erreichen, ist der Klappmechanismus 136 mittels einer im Wesentlichen L-förmigen Anordnung aus zueinander abgewinkelt vorgesehenen Radführungen 208, 210 der Fixiereinrichtung 134 gebildet. In einem kraftfreien Zustand nimmt der Klappmechanismus 136 aufgrund seiner Gewichtsverteilung die in Figur 7 dargestellte Grund- oder Ausgangsposition ein. Wird nun das Radfahrzeug 102 auf die Montagebasis 130 aufgerollt, rollt der Vorderreifen 202 in die in der Ausgangsposition auf Ebene der Montagebasis 130 befindliche Radführung 208 auf. Bei fortgesetzter Rollbewegung nach vorne klappt das Vorderrad 202 selbsttätig den Klappmechanismus 136 in die in Figur 6 dargestellte Position um. Das Gewicht des Vorderreifens 202 drückt nun Radführung 210 auf die Montagebasis 130 und Radführung 208 nach oben. Durch die zweikomponentig ausgebildete Fixiereinrichtung 134 gemäß Figur 6 und Figur 7 ist der Vorderreifen 202 und dadurch das gesamte Radfahrzeug 102 an der Vorrichtung 100 lösbar festgelegt. Dies vereinfacht den Wasch-, Pflege- und Reinigungsprozess für einen Benutzer. Um das lösbar festgelegte Radfahrzeug 102 nach Abschluss des Wasch-, Pflege- und Reinigungsprozesses wieder von der Vorrichtung 100 zu trennen, reicht es, wenn ein Benutzer das Radfahrzeug zurückzieht, wodurch sich der Vorderreifen 202 von den Klemmbacken 204 löst und den Klappmechanismus 136 ausgehend von der Konfiguration von Figur 6 in die Konfiguration gemäß Figur 7 zurückklappt. Dann kann ein Benutzer bequem das Radfahrzeug 100 von der Montagebasis 130 und über die geneigte Platte 138 von der Vorrichtung 100 herunterrollen.

In Figur 6 und Figur 7 ist noch gezeigt, dass die Lagerachse 206 durch einen Verstellmechanismus in eine von mehreren in Längsrichtung voneinander beabstandeten Rastnuten 212 eingeführt werden kann, um die Fixiereinrichtung 134 auf unterschiedlich große Vorderreifen 202 anpassen zu können. Hierfür muss ein Benutzer zum Beispiel durch Angreifen an einer der Radführungen 208, 210 lediglich die Lagerachse 206 leicht anheben, längsverschieben und in eine passende der Rastnuten 212 einführen.

**Figur 8** zeigt einen Hinterreifen-Montageabschnitt 220 einer Wasch- und Pflegevorrichtung 100 gemäß einem exemplarischen Ausführungsbeispiel der Erfindung zum Montieren eines Hinterreifens 222 eines Radfahrzeugs 102 in einem Zustand, in dem der Hinterreifen 222 des Radfahrzeugs 102 an der Vorrichtung 100 montiert ist.

Genauer gesagt stellt Figur 8 eine Führungs- und Befestigungseinrichtung 133 dar, an der das Hinterrad 222 angebracht werden kann. Die Führungs- und Befestigungseinrichtung 133 weist ein Rollenlager 132 auf, das durch eine Mehrzahl von rotierfähig gelagerten Rollen gebildet ist. Wird der Hinterreifen 222 auf die Führungs- und Befestigungseinrichtung 133 aufgerollt, während der Vorderreifen 202 in der in Figur 6 dargestellten Weise an der Vorrichtung 100 befestigt ist, kann der Hinterreifen 222 durch Betätigung der Pedale des Radfahrzeugs 102 in Drehung versetzt werden, ohne dass sich das Radfahrzeug 102 als Ganzes vorwärts bewegt. Dies wird durch das Rollenlager 132 bewerkstelligt, an dem der Hinterreifen 222 ohne Vorwärtsbewegung abrollen kann. Dies ermöglicht es einem Benutzer, die Kette des Radfahrzeugs 102 (bzw. andere bewegliche Teile) mit einem Pflegemittel (zum Beispiel Pflegeöl) zu beaufschlagen, ohne dass sich das Radfahrzeug 102 unerwünscht vorwärtsbewegt. Auch eine Reinigung der Kette oder eines anderen beweglichen Teils des Radfahrzeugs 102 wird durch die dargestellte Führungs- und Befestigungseinrichtung 133 ermöglicht.

**Figur 9** zeigt eine schematische Ansicht einer Wasch- und Pflegevorrichtung 100 gemäß einem exemplarischen Ausführungsbeispiel der Erfindung.

Die Vorrichtung 100 weist eine zum Beispiel als Prozessor (zum Beispiel Mikroprozessor oder CPU) ausgebildete Steuereinrichtung 146 zum Steuern der Vorrichtung 100 auf, die zum Beispiel in dem Aufnahmegehäuse 126 untergebracht sein kann. Ein portables Kommunikationsgerät 148, zum Beispiel ein Smartphone, kann zum bidirektionalen Kommunizieren mit der Steuereinrichtung 146 über ein Mobilfunknetz oder das Internet ausgebildet sein, wenn auf dem portablen Kommunikationsgerät 148 eine entsprechende Software (zum Beispiel eine App) gespeichert bzw. installiert ist.

Insbesondere kann die App ausgebildet sein, mittels Kommunizierens mit der Steuereinrichtung 146 eine Inbetriebnahme der Vorrichtung 100 zu initiieren, nachdem über die App eine Nutzungsgebühr zur Nutzung der Vorrichtung 100 entrichtet worden ist. Die Entrichtung der Nutzungsgebühr kann die Benutzung der Vorrichtung 100 für eine entsprechende Zeit (zum Beispiel 10 Minuten) gestatten. Alternativ kann die Nutzungsgebühr abhängig von dem oder den gewünschten Betriebszuständen der Vorrichtung 100, den ein Benutzer nutzen möchte, bemessen werden. Zum Beispiel kann eine jeweilige Teilgebühr für Waschen, Pflegen, Reinigen bzw. Druckluft erhoben werden.

Es ist aber auch möglich, dass das portable Kommunikationsgerät 148 von einem Betreiber der Vorrichtung 100 verwendet wird. Zum Beispiel kann die App ausgebildet sein, mittels Kommunizierens mit der Steuereinrichtung 146 Informationen über einen Restbestand der einzelnen Betriebsmittel, insbesondere eines Pflegemittels und eines Reinigungsmittels, von der Vorrichtung 100 abzurufen. Zu diesem Zweck kann zum Beispiel an einem Reinigungsmittelbehälter 180 ein Restbestand des darin enthaltenen Reinigungsmittels sensorisch erfasst werden. In entsprechender Weise kann an einem Pflegemittelbehälter 182 ein Restbestand des darin enthaltenen Pflegemittels sensorisch erfasst werden. Die entsprechenden Sensordaten können der Steuereinrichtung 146 zugeführt werden bzw. in einer Datenbank 184 (zum Beispiel gespeichert auf einem elektronischen Massenspeicher, wie beispielsweise einer Festplatte) abgelegt werden, auf welche die Steuereinrichtung 146 und/oder das portable Kommunikationsgerät 148 Zugriff haben kann oder können. Ein Benutzer des portablen Kommunikationsgeräts 148 kann über eine zum Beispiel drahtlose Kommunikationsverbindung 186 zwischen entsprechenden Kommunikationsschnittstellen 188, 190 (zum Beispiel Antennen) der Steuereinrichtung 146 bzw. des portablen Kommunikationsgeräts 148 Restbestände der einzelnen Behälter 180, 182 abfragen bzw. mitgeteilt bekommen. Sinkt ein Füllstand eines jeweiligen Behälters 180, 182 unter einen kritischen Wert ab, kann zum Beispiel die Steuereinrichtung 146 oder das portable Kommunikationsgerät 148 bei einem Zulieferer eine entsprechende Nachbestellung des entsprechenden Betriebsmittels auslösen, das dann rechtzeitig eintrifft. Dadurch ist ein Leerlaufen der Behälter 180, 182 und damit eine Unterbrechung der Funktionsfähigkeit der Vorrichtung 100 zuverlässig unterbunden.

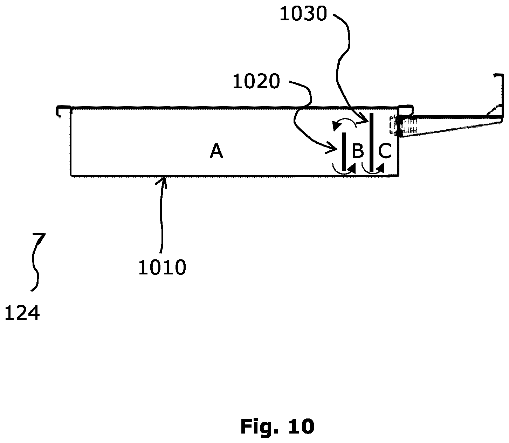

**Figur 10** zeigt eine Abtrenneinrichtung gemäß einer exemplarischen Ausführung. Die Abtrenneinrichtung weist einen Schmierstoffabscheider 124 zum Aufbereiten der Waschflüssigkeit auf, die typischerweise einen öligen und einen wässrigen Anteil hat. Mittels der Abtrenneinrichtung aufbereitete Waschflüssigkeit könnte zum Beispiel in die Kanalisation geleitetet werden oder für einen weiteren Waschvorgang wiederverwendet werden.

Der Schmierstoffabscheider 124 weist ein Becken 1010 und eine erste Tauchwand 1020 auf, welche ein erstes Kompartiment A und ein zweites Kompartiment B in dem Becken 1010 voneinander trennt. Weiter weist der Schmierstoffabscheider 124 eine zweite Tauchwand 1030 auf, welche das zweite Kompartiment B und ein drittes Kompartiment C des Beckens voneinander trennt. Waschflüssigkeit von dem Waschvorgang gelangt zunächst in Kompartiment A und fließt im Verlauf des Abscheidens von Schmierstoffen in Richtung des Kompartiments C. Die beiden Tauchwände 1020, 1030 weisen im Bodenbereich des Beckens einen Durchgang, zum Beispiel einen Schlitz oder ein Loch, zum Durchströmen der Waschflüssigkeit von dem ersten Kompartiment A in das zweite Kompartiment B bzw. vom zweiten Kompartiment B in das dritte Kompartiment C auf. Da der ölige Anteil der Waschflüssigkeit aufschwimmt, kann nur der wässrige Anteil der Waschflüssigkeit durch den Durchgang in das jeweils nächste Kompartiment strömen.

Vorteilhaft ist die zweite Tauchwand 1030, ausgehend von dem Boden des Beckens 1010 höher als die erste Tauchwand 1020. Das hat zur Folge, dass zwar ein Flüssigkeitsaustausch zwischen dem ersten und dem zweiten Kompartiment A, B auch oberhalb der Tauchwand stattfinden könnte, jedoch kein aufschwimmender öliger Anteil in das dritte Kompartiment C gelangen kann.

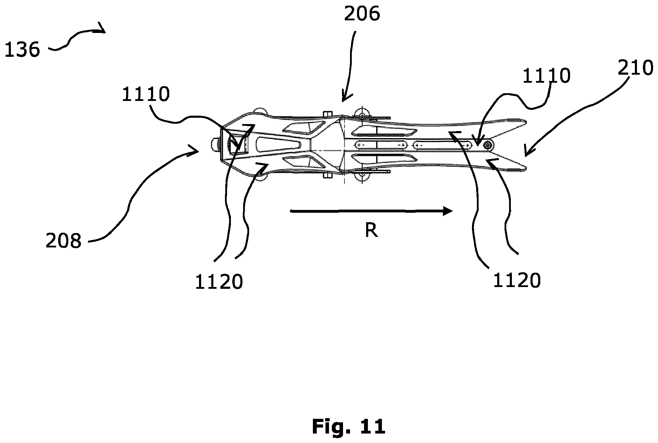

**Figur 11** zeigt eine Fixiervorrichtung 134 für einen Reifen eines Radfahrzeugs 102 gemäß eines Ausführungsbeispiels. Die Fixiereinrichtung 134 weist einen Klappmechanismus 136 auf, der bei Einführen des Vorderrads 202 umklappt und das Vorderrad 202 dadurch an der Montagebasis 130 (nicht abgebildet) fixiert;

Der Klappmechanismus 136 der Fixiereinrichtung 134 weist eine erste Radführung 208 und eine zweite Radführung 210 auf, wobei der Klappmechanismus 136 um eine Lagerachse 206 umklappbar ist und wobei die Lagerachse 206 zwischen der ersten Radführung 208 und der zweiten Radführung 210 ausgebildet ist. Die erste Radführung 208 und die zweite Radführung 210 sind an der Lagerachse 206 zueinander abgewinkelt. Der Klappmechanismus 136 ist derart ausgebildet, dass die erste Radführung 208 in einem kraftfreien Zustand auf der Ebene der Montagebasis 130 (nicht abgebildet) aufliegt. Dabei ist in einer Aufrollrichtung R eines Radfahrzeugs die erste Radführung 208 vor der abgewinkelten zweiten Radführung 210 angeordnet, sodass bei fortgesetzter Rollbewegung das Vorderrad 202 der Klappmechanismus 136 um die Lagerachse 206 umklappt und die zweiten Radführung 210 auf die Montagebasis 130 drückt und die erste Radführung 208 von der Montagebasis 130 (nicht abgebildet) weggeklappt ist.

Unterschiedliche Radfahrzeuge haben in der Regel unterschiedlich große Reifen. Um eine besonders gute Fixierung des Radfahrzeugs zu gewährleisten, ist es vorteilhaft, wenn die Dimensionen der Fixiereinrichtung mit der Größe des Reifens korrelieren.

Daher weist in dieser vorteilhaften Ausführung die erste Radführung 208 eine Grundfläche 1110 und zwei seitliche Wandungen 1120 auf, die sich entlang einer Erstreckungsrichtung von der Grundfläche 1110 aus erstrecken, um zwischen ihnen das Vorderrad 202 aufzunehmen. Dabei verkleinert sich der Abstand der zwei seitlichen Wandungen 1120 zueinander entlang der Erstreckungsrichtung. Außerdem sind die seitlichen Wandungen der ersten Radführung 208 derart auf der Grundfläche 1010 angeordnet, dass sich ein Abstand der beiden seitlichen Wandungen zueinander an der Grundfläche in Aufrollrichtung (R) verkleinert.

So lassen sich ohne weitere Anpassungen Reifen unterschiedlicher Größe in der Fixiervorrichtung 134 fixieren.Ergänzend ist darauf hinzuweisen, dass ***"*aufweisend*"* keine anderen Elemente oder Schritte ausschließt und *"*eine*"* oder *"*ein*"* keine Vielzahl** ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Wasch- und Pflegevorrichtung (100) für ein Radfahrzeug (102), insbesondere für ein Fahrrad, wobei die Wasch- und Pflegevorrichtung (100) aufweist:
eine Wascheinrichtung (104) zum Waschen des Radfahrzeugs (102) mit einer Waschflüssigkeit;
eine Pflegeeinrichtung (106) zum Pflegen des Radfahrzeugs (102) mit einem Pflegemittel; eine Montagebasis (130) zum Montieren des zu waschenden und zu pflegenden Radfahrzeugs (102); und
eine Abtrenneinrichtung (108) zum zumindest teilweisen Abtrennen gebrauchter Waschflüssigkeit von gebrauchtem Pflegemittel,
**dadurch gekennzeichnet, dass**
die Abtrenneinrichtung (108) zum Sammeln von gebrauchtem Pflegemittel in einem Sammelvolumen, und insbesondere zusätzlich von gebrauchtem Reinigungsmittel und von dem Radfahrzeug (102) abgetrennten Schmutz, ausgebildet ist, wobei die Montagebasis (130) einen Auslass (117) zum Auslassen von gebrauchter Waschflüssigkeit und von gebrauchtem Pflegemittel in die an einer Unterseite der Montagebasis (130) angebrachten Abtrenneinrichtung (108) aufweist.

2. Vorrichtung (100) gemäß Anspruch 1, aufweisend zumindest eines der folgenden Merkmale:
wobei die Wascheinrichtung (104) eine händisch handhabbare Zuführeinrichtung (110) zum Zuführen der Waschflüssigkeit aufweist;
wobei die Wascheinrichtung (104) zum Zuführen der Waschflüssigkeit unter Druck ausgebildet ist;
wobei die Wascheinrichtung (104) mindestens eine Düse (112) zum Auslassen der Waschflüssigkeit aufweist;
wobei die Pflegeeinrichtung (106) zum Zuführen eines Schmierstoffs als Pflegemittel ausgebildet ist;
wobei die Pflegeeinrichtung (106) eine händisch handhabbare Zuführeinrichtung (111) zum Zuführen des Pflegemittels aufweist;
wobei die Pflegeeinrichtung (106) mindestens eine Bürste (114) an einem Auslass (117) zum Auslassen des Pflegemittels aufweist.

3. Vorrichtung (100) gemäß einem der Ansprüche 1 oder 2, wobei die Vorrichtung aufweist
eine Reinigungseinrichtung (118) zum Reinigen des Radfahrzeugs (102) mit einem Reinigungsmittel, und/oder
eine Drucklufteinrichtung (120) zum Zuführen von Druckluft zu dem Radfahrzeug (102), wobei insbesondere die Drucklufteinrichtung (120) zum Aufpumpen eines Reifens des Radfahrzeugs (102) und/oder zum Entfernen von Waschflüssigkeit von dem Radfahrzeug (102) ausgebildet ist.

4. Vorrichtung (100) gemäß einem der Ansprüche 1 bis 3,
wobei die Abtrenneinrichtung (108) zum selektiven Ablassen abgetrennter Waschflüssigkeit in eine Umgebung, insbesondere in eine Kanalisation, ausgebildet ist.

5. Vorrichtung (100) gemäß einem der Ansprüche 1 bis 4,
wobei die Abtrenneinrichtung (108) zum Rückführen abgetrennter und optional gereinigter Waschflüssigkeit an die Wascheinrichtung (104) zur Wiederverwendung ausgebildet ist.

6. Vorrichtung (100) gemäß einem der Ansprüche 1 bis 5,
wobei die Abtrenneinrichtung (108) einen Filter (122) und/oder einen Schmierstoffabscheider (124) aufweist., welcher insbesondere ein Becken (1010), eine erste Tauchwand (1020), welche ein erstes Kompartiment (A) und ein zweites Kompartiment (B) in dem Becken (1010) voneinander trennt, und eine zweite Tauchwand (1030), welche das zweite Kompartiment (B) und ein drittes Kompartiment (C) des Beckens (1010) voneinander trennt,
wobei die erste Tauchwand (1020) im Bodenbereich des Beckens (1010) einen Durchgang zum Durchströmen der Waschflüssigkeit zwischen dem ersten Kompartiment (A) und dem zweiten Kompartiment (B) aufweist,
wobei die zweite Tauchwand (1030) im Bodenbereich des Beckens (1010) einen weiteren Durchgang zum Durchströmen der Waschflüssigkeit zwischen dem zweiten Kompartiment (B) und dem zweiten Kompartiment (C) aufweist,
wobei die zweite Tauchwand (1030) von dem Boden des Beckens (1010) ausgehend höher ist als die erste Tauchwand (1020), und
wobei der Schmierstoffabscheider (124) weiter insbesondere eine Gittereinheit aufweist, welche über dem ersten Kompartiment (A) zum Halten eines Filters (122) zum Herausfiltern von Schmutz angeordnet ist.

7. Vorrichtung (100) gemäß einem der Ansprüche 1 bis 6, aufweisend ein Aufnahmegehäuse (126) zum Aufnehmen eines mit der Pflegeeinrichtung (106) fluidisch gekoppelten Pflegemittelbehälters (182) mit Pflegemittel, und optional zum Aufnehmen eines mit einer Reinigungseinrichtung (118) der Vorrichtung (100) fluidisch gekoppelten Reinigungsmittelbehälters (180) mit Reinigungsmittel.

8. Vorrichtung (100) gemäß einem der Ansprüche 1 bis 7, aufweisend eine Begrenzungswand (128) an einer einem Benutzer abgewandten Seite der Vorrichtung (100) zum Begrenzen eines seitlichen Abfließens von Waschflüssigkeit und Pflegemittel heraus aus der Vorrichtung (100), wobei die Begrenzungswand (128) und das Aufnahmegehäuse (126) insbesondere an aneinander angrenzenden Seiten der in Draufsicht im Wesentlichen rechteckförmigen, und vorzugsweise oben offenen, Vorrichtung (100) angeordnet sind und die beiden verbleibenden Seiten offen sind.

9. Vorrichtung (100) gemäß einem der Ansprüche 1 bis 8,
wobei die Montagebasis (130) ein Rollenlager (132) zum rollfähigen Lagern eines Hinterrads des an der Montagebasis (130) fixierten Radfahrzeugs (102) aufweist.

10. Vorrichtung (100) gemäß Anspruch 9,
wobei die Montagebasis (130) eine Fixiereinrichtung (134) zum Fixieren eines Vorderrads des Radfahrzeugs (102) aufweist, wobei insbesondere die Fixiereinrichtung (134) einen Klappmechanismus (136) aufweist, der bei Einführen des Vorderrads umklappt und das Vorderrad dadurch an der Montagebasis (130) fixiert;
wobei weiter insbesondere der Klappmechanismus (136) der Fixiereinrichtung (134) eine erste Radführung (208) und eine zweite Radführung (210) aufweist,
wobei der Klappmechanismus (136) um eine Lagerachse (206) umklappbar ist,
wobei die Lagerachse (206) zwischen der ersten Radführung (208) und der zweiten Radführung (210) ausgebildet ist,
wobei die erste Radführung (208) und die zweite Radführung (210) an der Lagerachse (206) zueinander abgewinkelt sind,
wobei der Klappmechanismus (136) derart ausgebildet ist, dass die erste Radführung (208) in einem kraftfreien Zustand derart auf der Ebene der Montagebasis (130) aufliegt und dass in einer Aufrollrichtung (R) eines Radfahrzeugs auf die erste Radführung (208) und die abgewinkelte zweite Radführung (210) die erste Radführung (208) vor der zweiten Radführung (210) angeordnet ist, dass bei fortgesetzter Rollbewegung das Vorderrad (202) den Klappmechanismus (136) um die Lagerachse (206) umklappt und die zweite Radführung (210) auf die Montagebasis (130) drückt und die erste Radführung (208) von der Montagebasis (130) weggeklappt ist.

11. Vorrichtung (100) gemäß Anspruch 10,
wobei zumindest die erste Radführung (208) aufweist
eine Grundfläche (1110) und zwei seitliche Wandungen (1120), die sich entlang einer Erstreckungsrichtung von der Grundfläche (1110) aus erstrecken, um zwischen ihnen das Vorderrad (202) aufzunehmen,
wobei sich der Abstand der zwei seitlichen Wandungen (1120) zueinander entlang der Erstreckungsrichtung vergrößert,
wobei die seitlichen Wandungen (1120) der ersten Radführung (208) insbesondere derart auf der Grundfläche (1110) angeordnet sind, dass sich ein Abstand der beiden seitlichen Wandungen (1120) zueinander an der Grundfläche (1110) in Aufrollrichtung ^{®} verkleinert.

12. Vorrichtung (100) gemäß einem der Ansprüche 1 bis 11, aufweisend zumindest eines der folgenden Merkmale:
aufweisend eine, insbesondere klappbare, geneigte Platte (138) zum Überführen des Radfahrzeugs (102) auf die Montagebasis (130),
aufweisend mindestens einen Staplerschuh (140) an einer Unterseite der Montagebasis (130) zum Transportieren der Vorrichtung (100), insbesondere mittels eines Gabelstaplers,
aufweisend Rollen (142) an einer Unterseite der Montagebasis (130) zum Rollen der Vorrichtung (100).

13. Vorrichtung (100) gemäß einem der Ansprüche 1 bis 12, aufweisend eine Benutzerschnittstelle (144), insbesondere angeordnet an einem Aufnahmegehäuse (126), zum Anwählen eines von mehreren Betriebsmodi der Vorrichtung (100), und/oder
aufweisend eine Steuereinrichtung (146) zum Steuern der Vorrichtung (100) und ein, insbesondere portables, Kommunikationsgerät (148) zum, insbesondere bidirektionalen, Kommunizieren mit der Steuereinrichtung (146),
wobei das portable Kommunikationsgerät (148) insbesondere ein Mobilfunkgerät mit einer darauf installierten App zum Kommunizieren mit der Steuereinrichtung (146) ist,
die Vorrichtung (100) weiter insbesondere aufweisend zumindest eines der folgenden Merkmale:
wobei die App ausgebildet ist, mittels Kommunizierens mit der Steuereinrichtung (146) eine Inbetriebnahme der Vorrichtung (100) zu initiieren, insbesondere nach elektronischer Entrichtung einer Nutzungsgebühr über die App;
wobei die App ausgebildet ist, mittels Kommunizierens mit der Steuereinrichtung (146) Informationen über einen Restbestand mindestens eines Betriebsmittels, insbesondere des Pflegemittels und/oder eines Reinigungsmittels und/oder von Druckluft, der Vorrichtung (100) abzurufen.

14. System, aufweisend:
eine Wasch- und Pflegevorrichtung (100) gemäß einem der Ansprüche 1 bis 13; und
einen mit der Pflegeeinrichtung (106) fluidisch gekoppelten oder koppelbaren Pflegemittelbehälter (182) mit Pflegemittel, und optional einen mit einer Reinigungseinrichtung (118) der Wasch- und Pflegevorrichtung (100) fluidisch gekoppelten oder koppelbaren Reinigungsmittelbehälter (180) mit Reinigungsmittel.

15. Verfahren zum Waschen und Pflegen eines Radfahrzeugs (102) mittels einer Wasch- und Pflegevorrichtung (100) gemäß einem der Ansprüche 1 bis 13, wobei das Verfahren aufweist:
Waschen des Radfahrzeugs (102) mit einer Waschflüssigkeit;
Pflegen des Radfahrzeugs (102) mit einem Pflegemittel; und zumindest teilweises Abtrennen gebrauchter Waschflüssigkeit von gebrauchtem Pflegemittel.

## Claims

1. A washing and care device (100) for a wheeled vehicle (102), in particular for a bicycle, the washing and care device (100) comprising:
a washing equipment (104) for washing the wheeled vehicle (102) with a washing liquid;
a care equipment (106) for caring the wheeled vehicle (102) with a care product;
a mounting base (130) for mounting the wheeled vehicle (102) to be washed and cared; and
a separating equipment (108) for at least partially separating used washing liquid from used care product,
**characterized in that** the separating equipment (108) is designed to collect used care product in a collection volume, and in particular additionally used cleaning agent and dirt separated from the wheeled vehicle (102),
wherein the mounting base (130) has an outlet (117) for discharging used washing liquid and used care product into the separating equipment (108) attached to an underside of the mounting base (130).

2. The device (100) according to claim 1, comprising at least one of the following features:
wherein the washing equipment (104) comprises a manually operable feeding equipment (110) for feeding the washing liquid;
wherein the washing equipment (104) is designed to supply the washing liquid under pressure;
wherein the washing equipment (104) comprises at least one nozzle (112) for discharging the washing liquid;
wherein the care equipment (106) is designed to supply a lubricant as a care product;
wherein the care equipment (106) comprises a manually operable feeding equipment (111) for feeding the care product;
wherein the care equipment (106) comprises at least one brush (114) at an outlet (117) for discharging the care product.

3. The device (100) according to any one of claims 1 or 2, wherein the device comprises:
a cleaning device (118) for cleaning the wheeled vehicle (102) with a cleaning agent, and/or
a compressed air device (120) for supplying compressed air to the wheeled vehicle (102), in particular the compressed air device (120) being designed for inflating a tire of the wheeled vehicle (102) and/or for removing washing liquid from the wheeled vehicle (102).

4. The device (100) according to any one of claims 1 to 3,
wherein the separating equipment (108) is designed for selectively discharging separated washing liquid into an environment, in particular into a sewer system.

5. The device (100) according to any one of claims 1 to 4,
wherein the separating equipment (108) is designed to return separated and optionally purified washing liquid to the washing equipment (104) for reuse.

6. The device (100) according to any one of claims 1 to 5,
wherein the separating equipment (108) comprises a filter (122) and/or a lubricant separator (124), which in particular comprises a basin (1010), a first scum board (1020), which separates a first compartment (A) and a second compartment (B) in the basin (1010) from each other, and a second scum board (1030), which separates the second compartment (B) and a third compartment (C) of the basin (1010) from each other,
wherein the first scum board (1020) in the bottom region of the basin (1010) has a passage for the washing liquid to flow through between the first compartment (A) and the second compartment (B),
wherein the second scum board (1030) in the bottom region of the basin (1010) has a further passage for the washing liquid to flow through between the second compartment (B) and the second compartment (C),
wherein the second scum board (1030) is higher than the first scum board (1020) starting from the ground of the basin (1010), and
wherein the lubricant separator (124) further comprises, in particular, a grid unit arranged above the first compartment (A) for holding a filter (122) for filtering out dirt.

7. The device (100) according to any one of claims 1 to 6, comprising a receiving housing (126) for accommodating a care product container (182) with care product fluidly coupled to the care equipment (106), and optionally for accommodating a cleaning agent container (180) with cleaning agent fluidly coupled to a cleaning device (118) of the device (100).

8. The device (100) according to one of claims 1 to 7, comprising a limiting wall (128) on a side of the device (100) facing away from a user for limiting a lateral outflow of washing liquid and care product out of the device (100), wherein the limiting wall (128) and the receiving housing (126) are arranged in particular on adjacent sides of the device (100), which is substantially rectangular in plan view and preferably open at the top, and the two remaining sides are open.

9. The device (100) according to any one of claims 1 to 8,
wherein the mounting base (130) comprises a roller bearing (132) for rollably supporting a rear wheel of the wheeled vehicle (102) fixed to the mounting base (130).

10. The device (100) according to claim 9,
wherein the mounting base (130) comprises a fixing device (134) for fixing a front wheel of the wheeled vehicle (102), wherein in particular the fixing device (134) has a folding mechanism (136) which folds over when the front wheel is inserted and thereby fixes the front wheel to the mounting base (130);
wherein further in particular the folding mechanism (136) of the fixing device (134) comprises a first wheel guide (208) and a second wheel guide (210),
wherein the folding mechanism (136) can be folded about a bearing axis (206),
wherein the bearing axle (206) is formed between the first wheel guide (208) and the second wheel guide (210),
wherein the first wheel guide (208) and the second wheel guide (210) are angled towards each other at the bearing axle (206),
wherein the folding mechanism (136) is designed in such a way that the first wheel guide (208) rests on the plane of the mounting base (130) in a force-free state and that in a rolling direction (R) of a wheeled vehicle onto the first wheel guide (208) and the angled second wheel guide (210), the first wheel guide (208) is arranged in front of the second wheel guide (210), in that, as the rolling movement continues, the front wheel (202) folds the folding mechanism (136) around the bearing axis (206) and presses the second wheel guide (210) onto the mounting base (130) and the first wheel guide (208) is folded away from the mounting base (130).

11. The device (100) according to claim 10,
wherein at least the first wheel guide (208) comprises:
a base (1110) and two side walls (1120) extending along a direction of extension from the base (1110) to accommodate the front wheel (202) therebetween,
whereby the distance between the two lateral walls (1120) to each other increases along the direction of extension,
wherein the lateral walls (1120) of the first wheel guide (208) are arranged on the base surface (1110) in particular in such a way that a distance between the two lateral walls (1120) to each other on the base surface (1110) is reduced in the rolling-up direction ^{®}.

12. The device (100) according to any one of claims 1 to 11, comprising at least one of the following features:
comprising an inclined, in particular foldable, plate (138) for transferring the wheeled vehicle (102) onto the mounting base (130),
comprising at least one forklift shoe (140) on an underside of the mounting base (130) for transporting the device (100), in particular by means of a forklift truck,
comprising rollers (142) on an underside of the mounting base (130) for rolling the device (100).

13. The device (100) according to any one of claims 1 to 12, comprising a user interface (144), in particular arranged on a receiving housing (126), for selecting one of a plurality of operating modes of the device (100), and/or
comprising a control device (146) for controlling the device (100) and a, in particular portable, communication device (148) for communicating, in particular bidirectionally, with the control device (146),
wherein the portable communication device (148) is in particular a mobile radio device with an app installed thereon for communicating with the control device (146),
the device (100) further comprising in particular at least one of the following features:
wherein the app is designed to initiate start of operation of the device (100) by means of communication with the control device (146), in particular after electronic payment of a user fee via the app;
wherein the app is designed to retrieve information about a remaining stock of at least one operating agent, in particular of the care product and/or of a cleaning agent and/or of compressed air, of the device (100) by means of communication with the control device (146).

14. A system, comprising:
a washing and care device (100) according to any one of claims 1 to 13; and
a care product container (182) with care product fluidically coupled or couplable to the care device (106), and optionally a cleaning agent container (180) with cleaning agent fluidically coupled or couplable to a cleaning device (118) of the washing and care device (100).

15. A method of washing and caring for a wheeled vehicle (102) by means of a washing and care device (100) according to any one of claims 1 to 13, wherein the method comprises:
washing the wheeled vehicle (102) with a washing liquid;
caring for the wheeled vehicle (102) with a care product; and
at least partial separating of used washing liquid from used care product.

## Revendications

1. Dispositif de lavage et d'entretien (100) pour un véhicule à roues (102), en particulier pour un vélo, le dispositif de lavage et d'entretien (100) comprenant :
un dispositif de lavage (104) permettant de laver le véhicule à roues (102) avec un liquide de lavage ;
un dispositif d'entretien (106) permettant d'entretenir le véhicule à roues (102) avec un produit d'entretien ;
une base de montage (130) permettant de monter le véhicule à roues (102) à laver et à entretenir ; et
un dispositif de séparation (108) permettant de séparer au moins partiellement le liquide de lavage usagé du produit d'entretien usagé,
**caractérisé en ce que**
le dispositif de séparation (108) est conçu pour collecter le produit d'entretien usagé, et en particulier et de manière supplémentaire le produit de nettoyage usagé et la saleté séparée du véhicule à roues (102), dans un volume de collecte,
dans lequel la base de montage (130) présente une sortie (117) permettant d'évacuer le liquide de lavage usagé et le produit d'entretien usagé dans le dispositif de séparation (108) mis en place sur un côté inférieur de la base de montage (130).

2. Dispositif (100) selon la revendication 1, présentant au moins une des caractéristiques ci-dessous :
le dispositif de lavage (104) présente un dispositif d'alimentation (110) pouvant être manipulé manuellement et permettant une alimentation en liquide de lavage ;
le dispositif de lavage (104) est conçu pour une alimentation sous pression en liquide de lavage ;
le dispositif de lavage (104) présente au moins une buse (112) permettant d'évacuer le liquide de lavage ;
le dispositif d'entretien (106) est conçu pour une alimentation en lubrifiant faisant office de produit d'entretien ;
le dispositif d'entretien (106) présente un dispositif d'alimentation (111) pouvant être manipulé manuellement et permettant une alimentation en produit d'entretien ;
le dispositif d'entretien (106) présente au moins une brosse (114) au niveau d'une sortie (117) permettant d'évacuer le produit d'entretien.

3. Dispositif (100) selon la revendication 1 ou 2, dans lequel le dispositif présente
un dispositif de nettoyage (118) permettant de nettoyer le véhicule à roues (102) avec un produit de nettoyage, et/ou
un dispositif à air comprimé (120) permettant une alimentation en air comprimé du véhicule à roues (102), le dispositif à air comprimé (120) étant en particulier conçu pour gonfler un pneu du véhicule à roues (102) et/ou pour éliminer le liquide de lavage du véhicule à roues (102).

4. Dispositif (100) selon l'une quelconque des revendications 1 à 3, dans lequel le dispositif de séparation (108) est conçu pour vidanger de manière sélective le liquide de lavage séparé dans un environnement, en particulier dans une canalisation.

5. Dispositif (100) selon l'une quelconque des revendications 1 à 4, dans lequel le dispositif de séparation (108) est conçu pour renvoyer le liquide de lavage séparé et éventuellement purifié vers le dispositif de lavage (104) en vue de sa réutilisation.

6. Dispositif (100) selon l'une quelconque des revendications 1 à 5, dans lequel le dispositif de séparation (108) présente un filtre (122) et/ou un séparateur de lubrifiant (124), qui comprend en particulier un bassin (1010), une première cloison plongeante (1020) qui sépare un premier compartiment (A) et un deuxième compartiment (B) au sein du bassin (1010), et une deuxième cloison plongeante (1030) qui sépare le deuxième compartiment (B) et un troisième compartiment (C) du bassin (1010),
dans lequel la première cloison plongeante (1020) présente dans la zone de fond du bassin (1010) un passage permettant une circulation du liquide de lavage entre le premier compartiment (A) et le deuxième compartiment (B),
dans lequel la seconde cloison plongeante (1030) présente dans la zone de fond du bassin (1010) un autre passage permettant une circulation du liquide de lavage entre le deuxième compartiment (B) et le troisième compartiment (C), la seconde cloison plongeante (1030) étant plus haute, à partir du fond du bassin (1010), que la première cloison plongeante (1020), et
dans lequel le séparateur de lubrifiant (124) présente en outre en particulier une unité formant grille agencée au-dessus du premier compartiment (A) afin de retenir un filtre (122) permettant de filtrer la saleté.

7. Dispositif (100) selon l'une quelconque des revendications 1 à 6, comprenant un boîtier d'accueil (126) permettant d'accueillir un réservoir de produit d'entretien (182) contenant du produit d'entretien et couplé de manière fluidique au dispositif d'entretien (106) et permettant éventuellement d'accueillir un réservoir de produit d'entretien (180) contenant du produit d'entretien et couplé de manière fluidique à un dispositif de nettoyage (118) du dispositif (100).

8. Dispositif (100) selon l'une quelconque des revendications 1 à 7, comprenant, sur un côté du dispositif (100) qui est opposé à un utilisateur, une paroi de limitation (128) permettant de limiter l'écoulement latéral du liquide de lavage et du produit d'entretien hors du dispositif (100), la paroi de limitation (128) et le boîtier d'accueil (126) étant agencés en particulier sur des côtés adjacents du dispositif (100) essentiellement rectangulaire en vue de dessus et de manière préférée ouvert en haut et les deux côtés restants étant ouverts.

9. Dispositif (100) selon l'une quelconque des revendications 1 à 8, dans lequel la base de montage (130) présente un palier à rouleaux (132) permettant une mise sur palier, avec une capacité de roulement, d'une roue arrière du véhicule à roues (102) immobilisé au niveau de la base de montage (130).

10. Dispositif (100) selon la revendication 9,
dans lequel la base de montage (130) présente un dispositif d'immobilisation (134) permettant d'immobiliser une roue avant du véhicule à roues (102), ledit dispositif d'immobilisation (134) présentant en particulier un mécanisme de pliage (136) qui se rabat lors de l'insertion de la roue avant et immobilise ainsi la roue avant au niveau de la base de montage (130) ;
dans lequel le mécanisme de pliage (136) du dispositif d'immobilisation (134) présente en outre en particulier un premier guide de roue (208) et un second guide de roue (210),
dans lequel le mécanisme de pliage (136) peut être rabattu autour d'un axe de palier (206),
dans lequel l'axe de roulement (206) est formé entre le premier guide de roue (208) et le second guide de roue (210),
dans lequel le premier guide de roue (208) et le second guide de roue (210) présente un angle l'un par rapport au niveau de l'axe de palier (206),
dans lequel le mécanisme de pliage (136) est conçu de telle manière que, dans un état exempt d'application de force, le premier guide de roue (208) repose sur le plan de la base de montage (130) et le premier guide de roue (208) est agencé devant le second guide de roue (210) dans une direction de roulement (R) d'un véhicule à roues sur le premier guide de roue (208) et sur le second guide de roue (210) présentant un angle de telle manière que, lorsque le mouvement de roulement se poursuit, la roue avant (202) rabat le mécanisme de pliage (136) autour de l'axe de palier (206) et presse le second guide de roue (210) sur la base de montage (130) et le premier guide de roue (208) est rabattu à distance de la base de montage (130).

11. Dispositif (100) selon la revendication 10, dans lequel au moins le premier guide de roue (208) présente
une surface de base (1110) et deux parois latérales (1120) qui s'étendent le long d'une direction d'extension à partir de la surface de base (1110) et accueillent entre elles la roue avant (202),
dans lequel la distance entre les deux parois latérales (1120) augmente le long de la direction d'extension,
dans lequel les parois latérales (1120) du premier guide de roue (208) sont agencées sur la surface de base (1110) en particulier de telle manière qu'une distance entre les deux parois latérales (1120) se réduit au niveau de la surface de base (1110) dans la direction de roulement (R).

12. Dispositif (100) selon l'une quelconque des revendications 1 à 11, présentant au moins une des caractéristiques ci-dessous consistant à :
présenter une plaque inclinée (138), en particulier repliable, permettant de transférer le véhicule à roues (102) sur la base de montage (130),
présenter au moins un sabot de chariot élévateur (140) sur un côté inférieur de la base de montage (130) afin de transporter le dispositif (100), en particulier au moyen d'un chariot élévateur à fourche,
présenter des rouleaux (142) sur un côté inférieur de la base de montage (130) afin de faire rouler le dispositif (100).

13. Dispositif (100) selon l'une quelconque des revendications 1 à 12, présentant une interface utilisateur (144), en particulier agencée au niveau d'un boîtier d'accueil (126), permettant de sélectionner un parmi plusieurs modes de fonctionnement du dispositif (100), et/ou
présentant un dispositif de commande (146) permettant de commander le dispositif (100) et un dispositif de communication (148), en particulier portable, permettant de communiquer, en particulier de manière bidirectionnelle, avec le dispositif de commande (146),
dans lequel l'appareil de communication portable (148) est en particulier un appareil de téléphonie mobile muni d'une application installée sur ledit appareil et permettant de communiquer avec le dispositif de commande (146),
le dispositif (100) présente en outre en particulier au moins une des caractéristiques ci-dessous :
l'application est conçue pour initier une mise en service du dispositif (100) en communiquant avec le dispositif de commande (146), en particulier après le paiement électronique d'une redevance d'utilisation par l'intermédiaire de l'application ;
l'application est conçue pour récupérer des informations sur un stock résiduel d'au moins un équipement du dispositif (100), en particulier du produit d'entretien et/ou d'un produit de nettoyage et/ou de l'air comprimé, en communiquant avec le dispositif de commande (146).

14. Système présentant :
un dispositif de lavage et d'entretien (100) selon l'une quelconque des revendications 1 à 13 ; et
un réservoir de produit d'entretien (182) contenant du produit d'entretien et couplé ou pouvant être couplé de manière fluidique au dispositif d'entretien (106), et éventuellement un réservoir de produit d'entretien (180) contenant du produit d'entretien et couplé ou pouvant être couplé de manière fluidique à un dispositif de nettoyage (118) du dispositif de lavage et d'entretien (100).

15. Procédé de lavage et d'entretien d'un véhicule à roues (102) au moyen d'un dispositif de lavage et d'entretien (100) selon l'une quelconque des revendications 1 à 13, le procédé comprenant les étapes consistant à :
laver le véhicule à roues (102) avec un liquide de lavage ;
entretenir le véhicule à roues (102) avec un produit d'entretien ; et
séparer au moins partiellement le liquide de lavage usagé du produit d'entretien usagé.
